(19)

(11) **EP 3 186 952 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(21) Anmeldenummer: **15763227.4**

(22) Anmeldetag: **27.08.2015**

(51) Int Cl.:
***H04N 5/225*** *(2006.01)* ***G02B 21/36*** *(2006.01)*
***G06T 5/50*** *(2006.01)*

(86) Internationale Anmeldenummer:
**PCT/EP2015/069678**

(87) Internationale Veröffentlichungsnummer:
**WO 2016/030474 (03.03.2016 Gazette 2016/09)**

# (54) BILDAUFNAHMEVORRICHTUNG UND VERFAHREN ZUR BILDAUFNAHME

IMAGE CAPTURING DEVICE AND METHOD FOR IMAGE CAPTURING

DISPOSITIF ET PROCÉDÉ DE PRISES DE VUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2014 DE 102014112416**
**03.09.2014 DE 102014112666**

(43) Veröffentlichungstag der Anmeldung:
**05.07.2017 Patentblatt 2017/27**

(73) Patentinhaber: **Carl Zeiss Microscopy GmbH**
**07745 Jena (DE)**

(72) Erfinder:
- **STOPPE, Lars**
  **07743 Jena (DE)**
- **FUNCK, Max**
  **99423 Weimar (DE)**
- **BERNER, Andrea**
  **07745 Jena (DE)**

(74) Vertreter: **Sticht, Andreas**
**Kraus & Weisert**
**Patentanwälte PartGmbB**
**Thomas-Wimmer-Ring 15**
**80539 München (DE)**

(56) Entgegenhaltungen:
**EP-A1- 1 746 846**
**EP-A1- 2 101 207**
**US-A1- 2010 214 446**
**US-A1- 2012 098 950**

EP 3 186 952 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

GEBIET DER ERFINDUNG

Ausführungsbeispiele der Erfindung betreffen Vorrichtungen und Verfahren zur Bildaufnahme. Ausführungsbeispiele betreffen insbesondere derartige Vorrichtungen und Verfahren, die eine rechnerische Korrektur eines Abbildungsfehlers ermöglichen.

HINTERGRUND

Moderne optische Systeme sollen immer höheren Anforderungen an die Bildqualität genügen. Hierzu können hochgenaue und qualitativ hochwertige Optiken verwendet werden. Alternativ können günstigere Optiken in Kombination mit anschließender Nachverarbeitung verwendet.

Hochwertigere Optiken können eingesetzt werden, um qualitativ hochwertige Abbildungen zu erzeugen. Dies kann jedoch neben Kostennachteilen auch zu hohem Bauraum und hohem Gewicht führen. Darüber hinaus kann mit größerer Anzahl von Linsen die Reflexanfälligkeit des Systems erhöht und/oder die Transmission verringert werden. Für viele Anwendungen, beispielsweise im Bereich teurer Spezialgeräte, kann dies nachteilig sein.

Vorrichtungen und Verfahren, die billigere Optiken mit anschließender Nachverarbeitung kombinieren, können Entfaltungstechniken bei der digitalen Weiterverarbeitung beinhalten. Derartige Techniken sind häufig mit hohem Rechenaufwand verbunden. Dies kann sich insbesondere dann als nachteilig erweisen, wenn eine schnelle Berechnung eines Bildes erwünscht wird, beispielsweise zur Echtzeitdarstellung aufgenommener Präparatbereiche bei einem Mikroskopsystem. Ein geringer Kontrast der Modulationsübertragungsfunktion ("Modulation Transfer Function", MTF) und/oder ein schlechtes Signal-zu-Rausch Verhältnisses (SNR) des Bildes kann dazu führen, dass sich mit Entfaltungstechniken bestimmte Ortsfrequenzen nicht oder nur unter gewissen Zusatzannahmen rekonstruieren lassen. Dies kann beispielsweise für Ortsfrequenzbereiche der Fall sein, bei denen die MTF aberrationsbedingt Nullstellen aufweist. Derartige Nullstellen in der MTF können beispielsweise bei Astigmatismus oder Defokus auftreten. Farblängsfehler können mit Entfaltungstechniken nicht einfach kompensierbar sein.

Die US 2012/0098950 A1 offenbart ein Mikroskopsystem, bei welchem eine Mehrzahl von Beleuchtungswinkeln für die Beleuchtung eines Objekts einstellbar ist. Ein Detektor mit einem Bildsensor erfasst eine Mehrzahl von Bildern des Objekts für die Mehrzahl von Beleuchtungswinkeln. Der Bildsensor kann dabei ein Farbsensor sein. Zur Verbesserung des Verfahrens können jedoch bevorzugt monochromatische Bilder verwendet werden. Die Bildaufnahmevorrichtung dieser Druckschrift offenbart weiterhin eine elektronische Auswerteeinrichtung, die die Mehrzahl von Bildern verarbeitet, um eine Bildkorrektur anzuwenden. Zur Bildrekonstruktion wird dabei ein Algorithmus verwendet, der Pixel verschiebt und hinzufügt (Shift-and-Add-Pixel-Algorithmus).

Die EP 1 746 846 A1 offenbart ein Verfahren zur Korrektur chromatischer Aberrationen. Zu einer Ermittlung des Gesamtbildes werden Einzelbilder abhängig von dem zugehörigen Farbkanal verschoben. Die Verschiebung basiert dabei auf einer farbkanalabhängigen Kantenbreite eines Bildpunkts.

ZUSAMMENFASSUNG

Es besteht ein Bedarf an verbesserten Techniken zur Abbildung eines Objekts. Es besteht insbesondere ein Bedarf an Vorrichtungen und Verfahren, die den Einsatz kostengünstiger Abbildungsoptiken erlauben und die die rechnerische Komplexität bei der digitalen Weiterverarbeitung im Vergleich zu Entfaltungstechniken verringern können. Es besteht insbesondere ein Bedarf an Vorrichtungen und Verfahren, mit denen Farblängsfehler und/oder ein Astigmatismus korrigierbar sind.

Es werden eine Bildaufnahmevorrichtung nach Anspruch 1 sowie ein Verfahren nach Anspruch 13 bereitgestellt. Die abhängigen Ansprüche definieren weitere Ausführungsbeispiele.

Nach Ausführungsbeispielen werden Vorrichtungen und Verfahren angegeben, bei denen ein Objekt unter einer Mehrzahl von Beleuchtungswinkeln beleuchtet und jeweils ein Bild aufgenommen wird. Die Mehrzahl von Bildern wird rechnerisch weiterverarbeitet. Dabei kann eine Verschiebung auf wenigstens einen Teil der Mehrzahl von Bildern angewandt werden, die von dem Beleuchtungswinkel abhängt. Mit der Verschiebung können Bildbereiche örtlich verschoben werden. Nach Anwendung der Verschiebung können die Bilder aufsummiert oder anderweitig weiterverarbeitet werden.

Die Verschiebung kann für unterschiedliche Farbkanäle unterschiedlich sein, um eine chromatische Aberration zu korrigieren. Die Verschiebung kann feldpunktabhängig sein, um in der Bild ebene örtlich variierende Einflüsse beispielsweise bei der Astigmatismuskorrektur zu berücksichtigen.

Bei den Vorrichtungen und Verfahren nach Ausführungsbeispielen kann eine Bildkorrektur in rechnerisch effizienter Weise ausgeführt werden, ohne dass die Bilder mit der jeweiligen Punktspreizfunktion ("point spread function", PSF) entfaltet werden müssen. Durch die Beleuchtung unter einer Mehrzahl von Beleuchtungswinkeln und Berücksichtigung der Beleuchtungswinkel bei der rechnerischen Verarbeitung der Bilder können die Probleme verringert werden, die herkömmlich mit Nullstellen von MTFs verbunden sind. Informationsverlust kann verringert werden, indem die unter mehreren Beleuchtungswinkeln erfassten Bilder kombiniert werden. Die Kombination kann durch Operationen wie eine Verschiebung und Addition ausgeführt werden, die rechnerisch effizient ausführbar sind und eine Echtzeitbedingung erfüllen können.

Eine Bildaufnahmevorrichtung nach einem Ausführungsbeispiel umfasst eine Beleuchtungseinrichtung, die steuerbar ist, um eine Mehrzahl von Beleuchtungswinkeln für eine Beleuchtung eines Objekts einzustellen. Die Bildaufnahmevorrichtung umfasst einen Detektor mit einem Bildsensor, der eingerichtet ist, um eine Mehrzahl von Bildern eines Objekts für die Mehrzahl von Beleuchtungswinkeln zu erfassen. Die Bildaufnahmevorrichtung umfasst eine elektronische Auswerteeinrichtung zur Verarbeitung der Mehrzahl von Bildern, die mit dem Bildsensor gekoppelt ist. Die elektronische Auswerteeinrichtung ist eingerichtet, um wenigstens auf einen Teil der Mehrzahl von Bildern eine Bildkorrektur anzuwenden, die eine Verschiebung umfasst, wobei die Verschiebung von dem bei der Aufnahme des jeweiligen Bildes verwendeten Beleuchtungswinkel abhängt. Die elektronische Auswerteeinrichtung ist eingerichtet, um die Mehrzahl von Bildern nach der Bildkorrektur zu kombinieren.

Die elektronische Auswerteeinrichtung kann eingerichtet sein, um durch die Verarbeitung chromatische Aberrationen zu korrigieren.

Die elektronische Auswerteeinrichtung kann eingerichtet sein, um durch die Verarbeitung Farblängsfehler zu korrigieren.

Der Bildsensor weist mehrere Farbkanäle auf. Die Verschiebung hängt von dem jeweiligen Farbkanal und dem Beleuchtungswinkel bei der Aufnahme des jeweiligen Bildes ab.

Die Verschiebung, die im Ortsraum für einen Farbkanal verwendet wird, hängt dabei von einem Abstand zwischen einer Fokuslage für den Farbkanal und einer weiteren Fokuslage für einen weiteren Farbkanal ab. Ein Defokus zwischen Farbkanälen kann so berücksichtigt werden, und die damit verbundene farbabhängige geometrische Verwaschung von Objekträndern kann verringert werden.

Der Abstand zwischen Fokuslagen für wenigstens zwei Farbkanäle kann nichtflüchtig in einem Speichermedium der Bildaufnahmevorrichtung gespeichert sein. Alternativ oder zusätzlich können die Fokuslagen für die Farbkanäle nichtflüchtig in einem Speichermedium der Bildaufnahmevorrichtung gespeichert sein. Die elektronische Auswerteeinrichtung kann eingerichtet sein, um daraus rechnerisch die Verschiebung in Abhängigkeit von dem Beleuchtungswinkel für die Farbkanäle zu ermitteln.

Der Detektor kann eine Detektor-Schärfentiefe aufweisen, die größer ist als der Abstand zwischen Fokuslagen für die unterschiedlichen Farbkanäle.

Die elektronische Auswerteeinrichtung kann alternativ oder zusätzlich eingerichtet sein, um einen Astigmatismus zu korrigieren. Zur Astigmatismuskorrektur kann die Verschiebung von dem Beleuchtungswinkel bezogen auf eine oder mehrere Ebenen des Astigmatismus abhängen. Die Verschiebung kann davon abhängen, unter welchem Beleuchtungswinkel das Objekt in Bezug auf eine erste Ebene, die durch einen einer ersten Fokuslänge zugeordneten Meridian einer optischen Komponente und die optische Achse gebildet wird, beleuchtet wird. Die Verschiebung kann davon abhängen, unter welchem Beleuchtungswinkel das Objekt in Bezug auf eine von der ersten Ebene verschiedene zweite Ebene, die durch einen einer zweiten Fokuslänge zugeordneten weiteren Meridian der optischen Komponente und die optische Achse gebildet wird, beleuchtet wird.

Die Verschiebung kann von einem Abstand von Fokuslagen für unterschiedliche Ebenen der Abbildungsoptik abhängen.

Die elektronische Auswerteeinrichtung kann eingerichtet sein, um die Komponenten der Verschiebung entlang zweier orthogonaler Richtungen in der Bildebene jeweils abhängig von dem Beleuchtungswinkel zu bestimmen.

Die Verschiebung, die auf ein unter einem Beleuchtungswinkel erfasstes Bild angewandt wird, kann von einer Lage eines unter dem Beleuchtungswinkel einfallenden Strahls zu einer Ebene abhängen, die durch eine Achse des Astigmatismus und eine optische Achse einer Abbildungsoptik definiert ist.

Die Verschiebung, die auf ein unter einem Beleuchtungswinkel erfasstes Bild angewandt wird, kann von der Lage des unter dem Beleuchtungswinkel einfallenden Strahls zu einer ersten Ebene, die durch eine erste Achse des Astigmatismus und die optische Achse definiert ist, und zu einer zweiten Ebene, die durch eine zweite Achse des Astigmatismus und die optische Achse definiert ist, abhängen.

Eine Komponente der Verschiebung entlang einer ersten Koordinatenachse kann von einer Projektion des unter dem Beleuchtungswinkel einfallenden Strahls in die erste Ebene abhängen.

Eine weitere Komponente der Verschiebung entlang einer zweiten Koordinatenachse, die zu der ersten Koordinatenachse orthogonal ist, kann von einer Projektion des unter dem Beleuchtungswinkel einfallenden Strahls in die zweite Ebene abhängen.

Der Detektor kann eine Detektor-Schärfentiefe aufweisen, die größer ist als ein Abstand zwischen Fokuslagen für die unterschiedlichen Ebenen des Astigmatismus.

Die elektronische Auswerteeinrichtung kann alternativ oder zusätzlich eingerichtet sein, um eine Bildfeldwölbung zu korrigieren.

Der Detektor kann eine Detektor-Schärfentiefe aufweisen, die größer ist als ein Defokus, der durch die Kombination aus Farblängsfehlern, Astigmatismus und Bildfeldwölbung hervorgerufen wird.

Die Verschiebung, die von der elektronischen Auswerteeinrichtung angewandt wird, kann feldpunktunabhängig sein. Auf jedes Pixel eines Bildes oder eines Farbkanals des Bildes kann dieselbe Verschiebung angewandt werden, um das Bild oder den Farbkanal des Bildes in der Bildebene zu verschieben.

Die Verschiebung, die von der elektronischen Auswerteeinrichtung angewandt wird, kann feldpunktabhängig sein. Dadurch können auch Verzerrungen, beispielsweise durch Bildfeldwölbung oder Astigmatismus, korrigiert werden.

Für die Mehrzahl von Beleuchtungswinkeln kann die Verschiebung jeweils nichtflüchtig in einem Speichermedium der Bildaufnahmevorrichtung gespeichert sein. Alternativ oder zusätzlich kann Information über einen Defokus für unterschiedliche Farbkanäle oder unterschiedliche Ebenen eines Astigmatismus nichtflüchtig in einem Speichermedium der Bildaufnahmevorrichtung gespeichert sein, aus denen die elektronische Auswerteeinrichtung die Verschiebung errechnet.

Ein Verschieben eines Bildes oder eines Farbkanals eines Bildes kann ein Runden der Verschiebung auf einen ganzzahligen Pixelabstand umfassen.

Ein Verschieben eines Bildes oder eines Farbkanals eines Bildes kann eine Interpolation zwischen mehreren Pixelwerten umfassen, wenn die Verschiebung nicht gleich einem ganzzahligen Pixelabstand des Bildsensors ist.

Die elektronische Auswerteeinrichtung kann eingerichtet sein, um die Mehrzahl von Bildern nach der Bildkorrektur zu addieren, um eine Ergebnisbild zu errechnen.

Die elektronische Auswerteeinrichtung kann eingerichtet sein, um die Mehrzahl von Bildern nach der Bildkorrektur für eine Fourier-Ptychographie zu verwenden. Die elektronische Auswerteeinrichtung kann eingerichtet sein, um eine Phasen- und Amplitudenverteilung des Objekts zu errechnen. Die elektronische Auswerteeinrichtung kann eingerichtet sein, um ein Spektrum des Objekts im Ortsraum aus der Mehrzahl von durch die Bildkorrektur korrigierten Bildern zu rekonstruieren und die Phasen- und Amplitudenverteilung des Objekts durch eine FourierTransformation zu bestimmen. Die elektronische Auswerteeinrichtung kann eingerichtet sein, um ein Phasenkontrastbild des Objekts aus der Mehrzahl von Bildern nach der Bildkorrektur zu errechnen.

Die elektronische Auswerteeinrichtung kann eingerichtet sein, um die Mehrzahl von Bildern nach der Bildkorrektur für eine automatische Bestimmung einer Fokuslage und/oder für Phasenkontrastverfahren zu verwenden.

Die elektronische Auswerteeinrichtung kann eingerichtet sein, um die Bildkorrektur auf ein Bild anzuwenden, das für einen Beleuchtungswinkel erfasst wurde, während der Detektor ein weiteres Bild für einen weiteren Beleuchtungswinkel erfasst. Durch die Parallelisierung von Bildkorrektur und Aufnahme weiterer Bilder unter anderen Beleuchtungswinkeln kann die bis zur Bereitstellung des Ergebnisbildes benötigte Zeit weiter verringert werden.

Die Bildaufnahmevorrichtung kann ein Mikroskopsystem sein. Die Bilder können in einer Transmissionsanordnung erfasst werden. Die Bilder können in einer Reflexionsanordnung erfasst werden.

Ein Verfahren zur Bildaufnahme nach einem Ausführungsbeispiel umfasst ein Erfassen einer Mehrzahl von Bildern, wenn ein Objekt unter einer Mehrzahl von Beleuchtungswinkeln beleuchtet wird. Das Verfahren umfasst ein Verarbeiten der Mehrzahl von Bildern. Dabei wird eine Bildkorrektur auf wenigstens einen Teil der Mehrzahl von Bildern angewandt, wobei die Bildkorrektur eine Verschiebung umfasst, die von dem Beleuchtungswinkel bei der Aufnahme des jeweiligen Bildes abhängt. Die Mehrzahl von Bildern wird nach Anwendung der Bildkorrektur kombiniert.

Das Verfahren kann von der Bildaufnahmevorrichtung nach einem Ausführungsbeispiel automatisch ausgeführt werden.

Bei dem Verfahren können durch die Verarbeitung chromatische Aberrationen korrigiert werden.

Bei dem Verfahren können durch die Verarbeitung Farblängsfehler korrigiert werden.

Ein Bildsensor zum Erfassen der Bilder weist mehrere Farbkanäle auf. Die Verschiebung hängt von dem jeweiligen Farbkanal und dem Beleuchtungswinkel bei der Aufnahme des jeweiligen Bildes ab.

Die Verschiebung für einen Farbkanal hängt dabei von einem Abstand zwischen einer Fokuslage für den Farbkanal und einer weiteren Fokuslage für einen weiteren Farbkanal ab.

Der Abstand zwischen Fokuslagen für wenigstens zwei Farbkanäle kann nichtflüchtig in einem Speichermedium der Bildaufnahmevorrichtung gespeichert sein. Alternativ oder zusätzlich können die Fokuslagen für die Farbkanäle nichtflüchtig in einem Speichermedium der Bildaufnahmevorrichtung gespeichert sein. Bei dem Verfahren kann aus der Information über die Fokuslage(n) rechnerisch die Verschiebung in Abhängigkeit von dem Beleuchtungswinkel für die Farbkanäle ermittelt werden.

Bei dem Verfahren kann durch die Verarbeitung alternativ oder zusätzlich ein Astigmatismus korrigiert werden. Zur Astigmatismuskorrektur kann die Verschiebung von dem Beleuchtungswinkel in Relation zu einer oder mehreren Ebenen des Astigmatismus abhängen.

Die Verschiebung kann von einem Abstand von Fokuslagen für unterschiedliche Ebenen der Abbildungsoptik abhängen.

Bei dem Verfahren können die Komponenten der Verschiebung entlang zweier orthogonaler Richtungen in der Bildebene jeweils abhängig von dem Beleuchtungswinkel bestimmt werden.

Die Verschiebung, die bei dem Verfahren auf ein unter einem Beleuchtungswinkel erfasstes Bild angewandt wird, kann von einer Lage eines unter dem Beleuchtungswinkel einfallenden Strahls zu einer Ebene abhängen, die durch eine Achse des Astigmatismus und eine optische Achse einer Abbildungsoptik definiert ist.

Die Verschiebung, die bei dem Verfahren auf ein unter einem Beleuchtungswinkel erfasstes Bild angewandt wird, kann von der Lage des unter dem Beleuchtungswinkel einfallenden Strahls zu einer ersten Ebene, die durch eine erste Achse des Astigmatismus und die optische Achse definiert ist, und zu einer zweiten Ebene, die durch eine zweite Achse des Astigmatismus und die optische Achse definiert ist, abhängen.

Eine Komponente der Verschiebung entlang einer ersten Koordinatenachse kann bei dem Verfahren von einer Projektion des unter dem Beleuchtungswinkel einfallenden Strahls in die erste Ebene abhängen.

Eine weitere Komponente der Verschiebung entlang einer zweiten Koordinatenachse, die zu der ersten Koordinatenachse orthogonal ist, kann bei dem Verfahren von einer Projektion des unter dem Beleuchtungswinkel einfallenden Strahls in die zweite Ebene abhängen.

Das Verfahren kann alternativ oder zusätzlich eine Bildfeldwölbung korrigieren.

Die Verschiebung, die zur Bildkorrektur angewandt wird, kann feldpunktunabhängig sein. Auf jedes Pixel eines Bildes oder eines Farbkanals des Bildes kann dieselbe Verschiebung angewandt werden, um das Bild oder den Farbkanal des Bildes in der Bildebene zu verschieben.

Die Verschiebung, die zur Bildkorrektur angewandt wird, kann feldpunktabhängig sein. Dadurch können auch Verzerrungen, beispielsweise durch Bildfeldwölbung oder Astigmatismus, korrigiert werden.

Für die Mehrzahl von Beleuchtungswinkeln kann die Verschiebung jeweils nichtflüchtig in einem Speichermedium der Bildaufnahmevorrichtung gespeichert sein und zur Bildkorrektur abgerufen werden. Alternativ oder zusätzlich kann Information über einen Defokus für unterschiedliche Farbkanäle oder unterschiedliche Ebenen eines Astigmatismus nichtflüchtig in einem Speichermedium der Bildaufnahmevorrichtung gespeichert sein, aus denen die elektronische Auswerteeinrichtung die Verschiebung errechnet.

Bei dem Verfahren kann ein Verschieben eines Bildes oder eines Farbkanals eines Bildes ein Runden der Verschiebung auf einen ganzzahligen Pixelabstand umfassen.

Bei dem Verfahren kann ein Verschieben eines Bildes oder eines Farbkanals eines Bildes eine Interpolation zwischen mehreren Pixelwerten umfassen, wenn die Verschiebung nicht gleich einem ganzzahligen Pixelabstand des Bildsensors ist.

Das Verfahren kann ein Addieren der Mehrzahl von Bildern nach der Bildkorrektur umfassen, um eine Ergebnisbild zu errechnen.

Das Verfahren kann eine Fourier-Ptychographie unter Verwendung der Mehrzahl von Bildern nach der Bildkorrektur umfassen. Das Verfahren kann eine Berechnung einer Phasen- und Amplitudenverteilung des Objekts umfassen. Das Verfahren kann eine Rekonstruktion eines Spektrums des Objekts im Ortsraum aus den durch die Bildkorrektur korrigierten Bilder umfassen, wobei die Phasen- und Amplitudenverteilung des Objekts durch eine FourierTransformation bestimmt werden.

Das Verfahren kann eine automatische Bestimmung einer Fokuslage und/oder die Verwendung der korrigierten Bilder für Phasenkontrastverfahren umfassen.

Bei dem Verfahren kann die Bildkorrektur auf ein Bild angewandt werden, das für einen Beleuchtungswinkel erfasst wurde, während der Detektor gleichzeitig ein weiteres Bild für einen weiteren Beleuchtungswinkel erfasst. Durch die Parallelisierung von Bildkorrektur und Aufnahme weiterer Bilder unter anderen Beleuchtungswinkeln kann die bis zur Bereitstellung des Ergebnisbildes benötigte Zeit weiter verringert werden.

Das Verfahren kann von einem Mikroskopsystem automatisch ausgeführt werden. Die Bilder können in einer Transmissionsanordnung erfasst werden. Die Bilder können in einer Reflexionsanordnung erfasst werden.

Vorrichtungen und Verfahren nach Ausführungsbeispielen erlauben die Verwendung kostengünstiger Optiken. Die Verarbeitung der aufgenommenen Bilder kann schnell, auflösungserhaltend und artefaktreduzierend erfolgen. Feldpunktabhängige Korrekturen von Farblängsfehlern oder Astigmatismus sind möglich.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

## KURZE BESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

FIG. 1 ist eine schematische Darstellung einer Bildaufnahmevorrichtung nach einem Ausführungsbeispiel.

FIG. 2 ist ein Flussdiagramm eines Verfahrens nach einem Ausführungsbeispiel.

FIG. 3 veranschaulicht die Verarbeitung einer Mehrzahl von Bildern bei Vorrichtungen und Verfahren nach Ausführungsbeispielen.

FIG. 4 veranschaulicht die Anwendung einer Bildaufnahmevorrichtung und eines Verfahrens nach Ausführungsbeispielen zur Farblängsfehlerkorrektur.

FIG. 5 illustriert Punktspreizfunktionen aufgrund chromatischer Aberrationen, die von einer Bildaufnahmevorrichtung und einem Verfahren nach Ausführungsbeispielen korrigiert werden.

FIG. 6 und FIG. 7 illustrieren eine Ermittlung einer zur Farblängsfehlerkorrektur auf Pixel eines Farbkanals angewandten Verschiebung.

FIG. 8 veranschaulicht ein Verschiebungsfeld für Pixel unterschiedlicher Farbkanäle zur Farblängsfehlerkorrektur bei einer Bildaufnahmevorrichtung und einem Verfahren nach Ausführungsbeispielen für einen Beleuchtungswinkel.

FIG. 9 veranschaulicht ein Verschiebungsfeld für Pixel unterschiedlicher Farbkanäle zur Farblängsfehlerkorrektur bei einer Bildaufnahmevorrichtung und einem Verfahren nach Ausführungsbeispielen für einen weiteren Beleuchtungswinkel.

FIG. 10 ist ein Flussdiagramm eines Verfahrens nach einem Ausführungsbeispiel zur Farblängsfehlerkorrektur.

FIG. 11 veranschaulicht die Anwendung einer Bildaufnahmevorrichtung und eines Verfahrens nach Ausführungsbeispielen zur Astigmatismuskorrektur.

FIG. 12 ist ein Flussdiagramm eines Verfahrens nach einem Ausführungsbeispiel zur Astigmatismuskorrektur.

FIG. 13 veranschaulicht ein feldpunktabhängiges Verschiebungsfeld bei einer Bildaufnahmevorrichtung und einem Verfahren nach Ausführungsbeispielen.

FIG. 14 ist ein Blockdiagramm einer Bildaufnahmevorrichtung nach einem Ausführungsbeispiel.

FIG. 15 veranschaulicht unterschiedliche Techniken zur Anwendung einer Verschiebung auf ein Bild oder einen Farbkanal eines Bildes.

DETAILLIERTE BESCHREIBUNG VON AUSFÜHRUNGSBEISPIELEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Darstellungen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und ihr Zweck dem Fachmann verständlich wird.

In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein.

Nachfolgend werden Techniken beschrieben, mit denen Abbildungsfehler, die durch einen Defokus einer Beleuchtung eines Objekts hervorgerufen werden, rechnerisch korrigiert werden können. Unter einer "Korrektur" und einem "Korrigieren" von Abbildungsfehler werden dabei Maßnahmen verstanden, mit denen die Güte eines erzeugten Ergebnisbildes verbessert und wenigstens bestimmte Abbildungsfehler, wie beispielsweise Farblängsfehler und/oder Astigmatismus, verringert werden können.

Wie nachfolgend ausführlicher beschrieben wird, werden bei Ausführungsbeispielen der Erfindung sequentiell mehrere Bilder eines Objekts aufgenommen. Ein Beleuchtungswinkel für eine Beleuchtung des Objekts wird zur Aufnahme der mehreren Bilder auf unterschiedliche Werte eingestellt. Auf alle oder einen Teil der Bilder wird eine Bildkorrektur angewandt. Die Bildkorrektur kann eine Verschiebung von Pixeln in der Bildebene umfassen. Durch die Verschiebung kann die aus einem Defokus resultierende Unschärfe in der Bildebene verringert werden, die beispielsweise durch chromatische Aberration oder Astigmatismus hervorgerufen wird.

Die Bildkorrektur kann eine Verschiebung eines Bildes oder eines Farbkanals relativ zu einem weiteren Bild oder einem weiteren Farbkanal umfassen. Die Bildkorrektur kann das ganze Bild oder nur einzelne Bildbereiche betreffen. Die Bildkorrektur kann eine Verschiebung aller Pixel eines Bildes relativ zu allen Pixeln eines weiteren Bildes umfassen, wobei die Verschiebung von dem Beleuchtungswinkel bei Aufnahme des Bildes abhängt. Die Verschiebung kann in der Bildebene örtlich konstant oder örtlich veränderlich sein. Die Bildkorrektur kann eine Verschiebung von Pixeln eines Farbkanals eines Bildes relativ zu Pixeln eines weiteren Farbkanals desselben Bildes umfassen, wobei die Verschiebung von dem Beleuchtungswinkel bei Aufnahme des Bildes abhängt.

Die rechnerische Verarbeitung der erfassten Bilder, die die Bildkorrektur beinhaltet, kann auf in einem Speichermedium einer Bildaufnahmevorrichtung nichtflüchtig gespeicherten Daten beruhen. Die Daten können für unterschiedliche Beleuchtungswinkel die jeweils anzuwendende Verschiebung umfassen. Alternativ oder zusätzlich können die Daten Informationen enthalten, aus denen eine elektronische Auswerteeinrichtung die anzuwendende Verschiebung ermittelt.

Die Daten, die im Betrieb der Bildaufnahmevorrichtung zur rechnerischen Bildkorrektur verwendet werden, können vorab rechnerisch bestimmt und in dem Speichermedium gespeichert werden. Die Daten können alternativ oder zusätzlich durch eine Kalibrierungsmessung an der Bildaufnahmevorrichtung mit Referenzobjekten erzeugt und nichtflüchtig gespeichert werden.

Durch Kombination der mehreren Bilder nach der Bildkorrektur kann die elektronische Auswerteeinrichtung automatisch ein Ergebnisbild erzeugen, das die Information der mehreren Bilder enthält. Die Erzeugung des Ergebnisbildes kann so erfolgen, dass sie eine Verschiebung und Aufsummierung von Bildern enthält, ohne dass eines der Bilder mit seiner Punktspreizfunktion (PSF) entfaltet werden muss.

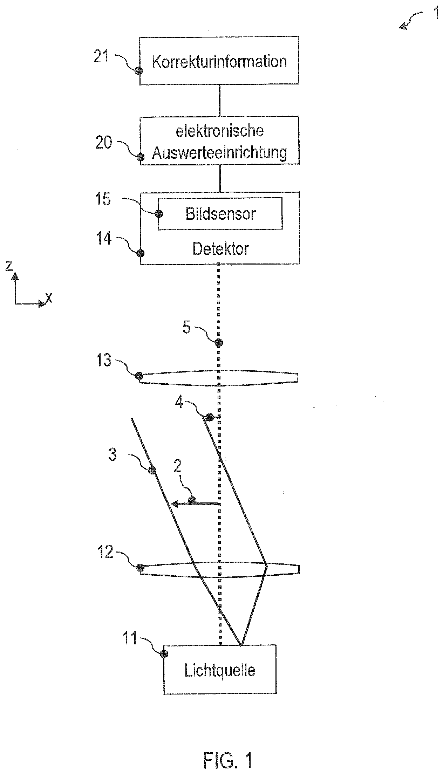

FIG. 1 ist eine schematische Darstellung einer Bildaufnahmevorrichtung 1 nach einem Ausführungsbeispiel. Die Bildaufnahmevorrichtung 1 kann zur automatischen Ausführung von Verfahren nach Ausführungsbeispielen ausgestaltet sei. Die Bildaufnahmevorrichtung 1 kann ein Mikroskopsystem sein oder kann ein Mikroskop umfassen, das mit einer noch ausführlicher beschriebenen steuerbaren Beleuchtungseinrichtung, einer Kamera mit einem Bildsensor und einer elektronischen Auswerteeinrichtung zur Bildkorrektur versehen ist.

Die Bildaufnahmevorrichtung 1 umfasst eine Beleuchtungseinrichtung mit einer Lichtquelle 11. Eine Kondensor-Linse 12 kann in an sich bekannte Weise das von der Lichtquelle 11 abgegeben Licht auf ein abzubildendes Objekt 2 lenken. Die Beleuchtungseinrichtung ist so ausgestaltet, dass Licht unter einer Mehrzahl unterschiedlicher Beleuchtungswinkel 4 auf das Objekt 2 eingestrahlt werden kann. Dazu kann beispielsweise die Lichtquelle 11 eine Leuchtdioden (LED)-Anordnung mit mehreren LEDs umfassen, die einzeln ansteuerbar sein können. Die LED-Anordnung kann eine LED-Ringanordnung sein. Alternativ kann ein steuerbares Element in einer Zwischenbildebene, in die eine herkömmliche Lichtquelle vergrößert abgebildet wird, angeordnet sein, um unterschiedliche Beleuchtungswinkel bereitzustellen. Das steuerbare Element kann eine bewegliche Lochblende, eine Mikrospiegelanordnung, eine Flüssigkeitskristallmatrix oder einen räumlichen Lichtmodulator umfassen.

Die Beleuchtungseinrichtung kann so eingerichtet sein, dass der Betrag des Beleuchtungswinkels 4, der mit einer optischen Achse 5 eingeschlossen wird, verändert werden kann. Die Beleuchtungseinrichtung kann so eingerichtet sein, dass eine Richtung des Strahls 3, mit dem das Objekt unter dem Beleuchtungswinkel 4 beleuchtet werden kann, auch in Polarrichtung um die optische Achse 5 herumbewegt werden kann.

Ein Detektor 14 der Bildaufnahmevorrichtung 1 erfasst für jeden von mehreren Beleuchtungswinkeln, unter denen das Objekt 2 beleuchtet wird, jeweils mindestens ein Bild des Objekts 2. Ein Bildsensor 15 des Detektors 14 kann beispielsweise als CCD-Sensor, CMOS-Sensor oder als ein TDI ("time delay and integration")-CCD-Sensor ausgestaltet sein. Eine Abbildungsoptik, beispielsweise ein nur schematisch dargestelltes Mikroskopobjektiv 13, kann ein vergrößertes Abbild des Objekts 2 an dem Bildsensor 15 erzeugen.

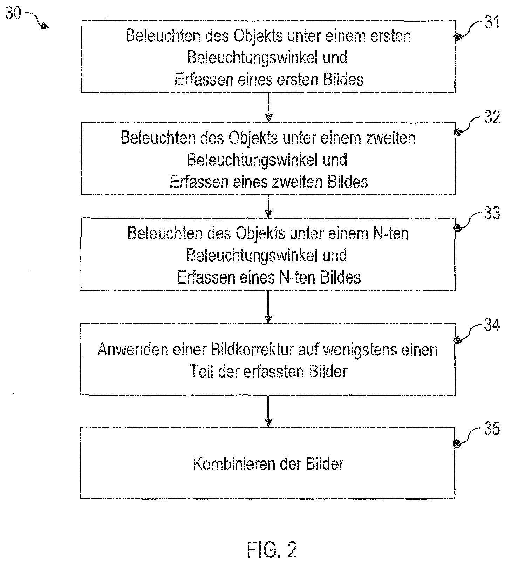

Die Bildaufnahmevorrichtung 1 umfasst eine elektronische Auswerteeinrichtung 20. Die elektronische Auswerteeinrichtung verarbeitet die Mehrzahl von Bildern weiter, die von dem Objekt 2 für die Mehrzahl von Beleuchtungswinkeln erfasst wurden. Die elektronische Auswerteeinrichtung 20 wendet eine Bildkorrektur auf einige oder alle der Mehrzahl von Bildern an. Wie unter Bezugnahme auf FIG. 2 bis FIG. 15 näher beschrieben wird, beinhaltet die Bildkorrektur jeweils eine Verschiebung, die von dem Beleuchtungswinkel bei Aufnahme des Bildes abhängt. Die Verschiebung zur Bildkorrektur kann den seitlichen Versatz in der Bildebene, der durch Farblängsfehler der Beleuchtungseinrichtung in der Bildebene oder einer Zwischenbildebene hervorgerufen wird, reduzieren. Dazu kann die Verschiebung in der Bildebene abhängig von einem Defokus, der sich für mehrere Wellenlängen ergibt, festgelegt sein. Pixel unterschiedlicher Farbkanäle können um unterschiedliche Verschiebungsvektoren in der Bildebene verschoben werden, um ein korrigiertes Bild zu erzeugen. Alternativ oder zusätzlich kann die Verschiebung in der Bildebene den seitlichen Versatz in der Bildebene, der durch einen Astigmatismus der Beleuchtungseinrichtung hervorgerufen wird, reduzieren. Dazu kann die Verschiebung in der Bildebene abhängig von dem Abstand zwischen Fokallagen festgelegt sein, der sich für unterschiedliche Ebenen des Astigmatismus ergibt.

Die Bildaufnahmevorrichtung 1 umfasst ein Speichermedium mit Korrekturinformation 21. Die elektronische Auswerteeinrichtung 20 ist mit dem Speichermedium gekoppelt oder kann dieses umfassen. Die elektronische Auswerteeinrichtung 20 kann die für jeden Beleuchtungswinkel jeweils anzuwendende Bildkorrektur abhängig von der Korrekturinformation in dem Speichermedium ermitteln.

Die korrigierten Bilder, die jeweils einem von mehreren Beleuchtungswinkeln zugeordnet sind, können auf unterschiedliche Weise kombiniert werden. Beispielsweise können die Bilder nach der Bildkorrektur aufaddiert werden. Die Bilder können für eine Rekonstruktion von Amplituden- und Phaseninformation des Objekts 2 in einem Fourier-Ptychographie-Algorithmus verwendet werden. Die korrigierten Bilder können zum Ermitteln einer Fokuslage oder anderweitig zur automatischen Einstellung der Bildaufnahmevorrichtung 1 verwendet werden. Die entsprechende Verarbeitung kann von der elektronischen Auswerteeinrichtung 20 automatisch ausgeführt werden.

Da die elektronische Auswerteeinrichtung 20 eine Bildkorrektur durch Anwendung einer Verschiebung auf Pixel der Bilder oder auf Farbkanäle der Bilder ausführen kann, ist die Verarbeitung echtzeitfähig. Die Bildaufnahmevorrichtung 1 kann eine Benutzerschnittstelle mit einer optischen Ausgabeeinrichtung umfassen, auf der die elektronische Auswerteeinrichtung 20 im Betrieb das erzeugte Ergebnisbild ausgeben kann. Eine rechnerische komplizierte Entfaltung von Einzelbildern mit ihrer Punktspreizfunktion ist nicht mehr unbedingt erforderlich. Durch Kombination von Information aus Bildern, die bei Beleuchtung unter mehreren Beleuchtungswinkeln erfasst wurden, kann auch Information über diejenigen Ortsraumfrequenzen des Objekts 2 gewonnen werden, bei denen die MTF für einen der Beleuchtungswinkel eine Nullstelle aufweist.

Die Funktionsweise der Bildaufnahmevorrichtung nach Ausführungsbeispielen wird unter Bezugnahme auf FIG. 2 bis FIG. 15 näher beschrieben.

FIG. 2 ist ein Flussdiagramm eines Verfahrens 30 nach einem Ausführungsbeispiel. Das Verfahren kann von der Bildaufnahmevorrichtung 1 automatisch ausgeführt werden.

Bei Schritt 31 wird das Objekt unter einem ersten Beleuchtungswinkel beleuchtet. Die Beleuchtungseinrichtung kann beispielsweise von der elektronischen Auswerteeinrichtung 20 so angesteuert werden, dass das Objekt unter dem ersten Beleuchtungswinkel beleuchtet wird. Der Bildsensor 15 erfasst ein erstes Bild.

Bei Schritt 32 wird das Objekt unter einem von dem ersten Beleuchtungswinkel verschiedenen zweiten Beleuchtungswinkel beleuchtet. Dazu kann die Beleuchtungseinrichtung entsprechend angesteuert werden. Der Bildsensor 15 erfasst ein zweites Bild.

Die sequentielle Beleuchtung des Objekts unter unterschiedlichen Beleuchtungswinkeln und Bildaufnahme kann wiederholt werden.

Bei Schritt 33 wird das Objekt unter einem N-ten Beleuchtungswinkel beleuchtet, wobei N eine ganze Zahl > 1 ist. Dazu kann die Beleuchtungseinrichtung entsprechend angesteuert werden. Der Bildsensor 15 erfasst ein N-tes Bild.

Bei Schritt 34 wird auf alle oder wenigstens einen Teil der N Bilder eine Bildkorrektur angewandt. Die Bildkorrektur umfasst eine Verschiebung von Pixeln in der Bildebene, die für die unterschiedlichen Bilder verschieden sein kann. Die Verschiebung kann für unterschiedliche Farbkanäle eines Bildsensors unterschiedlich sein. Das Anwenden der Bildkorrektur kann zeitlich überlappend mit der Erfassung weiterer Bilder erfolgen. Beispielsweise kann durch Bildkorrektur des ersten Bildes ein korrigiertes erstes Bild ermittelt werden, während gleichzeitig bei Schritt 32 oder 33 eine nachfolgende Bildaufnahme stattfindet.

Bei Schritt 35 können die für unterschiedliche Beleuchtungswinkel der Objektbeleuchtung erfassten Bilder rechnerisch kombiniert werden. Dazu können die Bilder addiert werden. Komplexere Verarbeitungen sind möglich. Beispielsweise kann Phaseninformation des Objekts 2 rechnerisch aus den mehreren Bildern bestimmt werden.

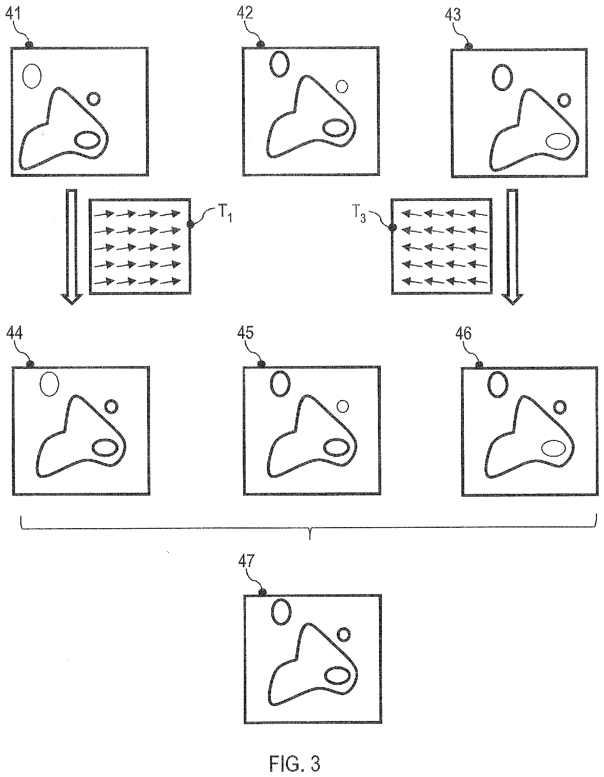

FIG. 3 ist eine schematische Darstellung zur weiteren Erläuterung der Arbeitsweise der Bildaufnahmevorrichtung 1.

Ein erstes Bild 41 wird bei Beleuchtung des Objekts unter einem ersten Beleuchtungswinkel erfasst. Ein zweites Bild 42 wird bei Beleuchtung des Objekts unter einem zweiten Beleuchtungswinkel erfasst. Ein drittes Bild 43 wird bei Beleuchtung des Objekts unter einem dritten Beleuchtungswinkel erfasst.

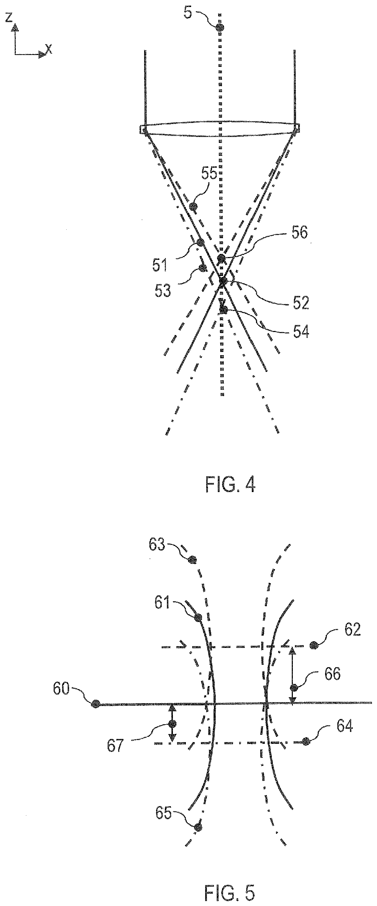

Durch eine Transformation $T_1$ verschiebt die elektronische Auswerteeinrichtung 20 das erste Bild 41, um ein korrigiertes erstes Bild 44 zu erzeugen. Die Transformation $T_1$ kann eine Verschiebung aller Pixel in der Bildebene beinhalten. Die Verschiebung kann für unterschiedliche Farbkanäle des ersten Bildes 41 unterschiedlich sein, wie anhand von FIG. 4 bis FIG. 10 noch ausführlicher beschrieben wird.

Durch eine Transformation $T_3$ verschiebt die elektronische Auswerteeinrichtung 20 das dritte Bild 43, um ein korrigiertes drittes Bild 46 zu erzeugen. Die Transformation $T_3$ kann eine Verschiebung aller Pixel in der Bildebene beinhalten. Die Verschiebung, die auf das dritte Bild 43 angewandt wird, kann von der Verschiebung, die auf das erste Bild 41 angewandt wird, verschieden sein. Die Verschiebung kann für unterschiedliche Farbkanäle des dritten Bildes 44 unterschiedlich sein, wie anhand von FIG. 4 bis FIG. 10 noch ausführlicher beschrieben wird.

Auch das zweite Bild 42 kann einer Bildkorrektur unterzogen werden, um ein korrigiertes zweites Bild 45 zu erzeugen.

Die korrigierten Bilder 44-46 können miteinander kombiniert werden. Beispielsweise kann ein Ergebnisbild 47 durch Aufaddieren der korrigierten Bilder 44-46 ermittelt werden. Das Aufaddieren kann für eine Mittelung der korrigierten Bilder 44-46 verwendet werden.

Aus den korrigierten Bildern 44-46 können alternativ oder zusätzlich auch Phasen- und/oder Amplitudeninformationen des abgebildeten Objekts ermittelt werden. Es kann eine automatische Fokussierung auf das Objekt ausgeführt werden. Dazu kann beispielsweise aus einer Parallaxe, die für unterschiedliche Beleuchtungswinkel bestimmt wird, der Abstand des Objekts und seine Lage relativ zu einer Fokusebene des Detektors 14 ermittelt werden.

Wie unter Bezugnahme auf FIG. 4 bis FIG. 10 näher beschrieben wird, können durch Bildaufnahmevorrichtungen und Verfahren nach Ausführungsbeispielen Farblängsfehler korrigiert werden, die beispielsweise durch eine chromatische Aberration des Detektorsystems oder der Objektbeleuchtung hervorgerufen werden.

Für eine Farblängsfehlerkorrektur kann die elektronische Auswerteeinrichtung 20 eingerichtet sein, um Pixel unterschiedlicher Farbkanäle relativ zueinander örtlich zu verschieben. Wenigstens eine Richtung der Verschiebung in der Bildebene kann von der Beleuchtungsrichtung abhängen. Es ist nicht erforderlich, die Pixel aller Farbkanäle bei der Bildkorrektur örtlich zu verschieben. Beispielsweise kann eine Fokussierung des Systems so erfolgen, dass als z-Ebene eine Fokuslage für Licht mit einer Wellenlänge festgelegt wird, die einem der Farbkanäle entspricht. Die Fokuslagen für den bzw. die weiteren Farbkanäle sind bei Farblängsfehlern um einen Defokus gegenüber dieser z-Ebene verschoben. Der Defokus in einer Zwischenbildebene oder in einer Ebene des Bildsensors kann zu lateralen Verwaschungen führen, beispielsweise zu Artefakten an Objekträndern.

Die unterschiedlichen Farbkanäle können beispielsweise die R-, G- und B-Kanäle eines RGB-Sensors sein. Andere Ausgestaltungen können verwendet werden. Beispielsweise können bei Spezialanwendungen Bildsensoren verwendet werden, die zwei, drei oder mehr als drei Farbkanäle bei definierten Wellenlängen oder definierten Wellenlängenbereichen aufweisen. Der Bildsensor kann eine Anordnung von Pixeln umfassen, die bei unterschiedlichen Wellenlängen sensitiv sind. Jeder der Farbkanäle kann in einem Wellenlängenbereich sensitiv sein, wobei die Wellenlängenbereiche unterschiedlicher Farbkanäle voneinander verschieden sind. Es können auch mehrere separate Bildsensoren verwendet werden, um die unterschiedlichen Farbkanäle zu erfassen. Filter oder intrinsische Eigenschaften von Halbleiterbereichen des Bildsensors, beispielsweise Bandlücken eines halbleiterbasierten Bildsensors, können verwendet werden, um die Wellenlängen der Farbkanäle festzulegen. Als Fokuslage für einen Farbkanal wird hier verkürzend die Fokuslage bezeichnet, die sich für Licht der Wellenlänge oder des Wellenlängenbereichs, in dem der Farbkanal sensitiv ist und der für den Farbkanal charakteristisch ist, ergibt. Beispielsweise kann die Fokuslage für einen Farbkanal diejenige Fokuslage sein, die sich für die Schwerpunktwellenlänge des Sensitivitätsbereichs des entsprechenden Farbkanals ergibt.

Die elektronische Auswerteeinrichtung nutzt zur Farblängsfehlerkorrektur Informationen über die Abstände der Fokuslagen für die unterschiedlichen Farbkanäle. Diese Information kann rechnerisch für die Bildaufnahmevorrichtung 1 ermittelt werden. Bekannte Techniken zur Simulation optischer Systeme können dafür eingesetzt werden. Alternativ oder zusätzlich können die Fokuslagen für unterschiedliche Lichtwellenlängen und/oder die Abstände auch gemessen werden. Referenzobjekte können verwendet werden, um durch Messungen die Information über die Fokuslagen oder wenigstens den Abstand zwischen zwei Fokuslagen unterschiedlicher Farbkanäle zu ermitteln. Diese Information kann nichtflüchtig in einem Speichermedium des Mikroskopsystems gespeichert werden.

Die Ermittlung der Information über die Fokuslagen und/oder deren Abstände erfolgt vor Abbildung des Objekts. Die in der Bildaufnahmevorrichtung gespeicherte Information über die Fokuslagen und/oder deren Abstände kann anschließend zur Abbildung einer Vielzahl von Objekten verwendet werden. Die Fokuslagen und/oder Information über deren Abstände können wenigstens für den Schwerpunkt des Detektionsspektrums jedes Farbkanals ermittelt werden. Alternative Wellenlängen können verwendet werden, beispielsweise die Wellenlänge, bei der die Sensitivität des entsprechenden Farbkanals maximal ist.

Alternativ oder zusätzlich zu einer rechnerischen Ermittlung der Verschiebung in Abhängigkeit von dem Beleuchtungswinkel durch Simulation der optischen Eigenschaften und/oder Kalibrierung kann die Verschiebung auch durch eine Registrierung unterschiedlicher Farbkanäle oder unterschiedlicher Bilder zueinander ermittelt werden. Dazu können verschiedene an sich bekannte Registrierungsverfahren eingesetzt werden. Beispielsweise kann ein SSIM ("Structural Similiarity")-Index verwedent werden, um eine Registrierung auszuführen und die Verschiebung zu ermitteln.

Zur Farblängsfehlerkorrektur kann für jedes der mehreren Bilder, die mit Objektbeleuchtung unter den mehreren Beleuchtungswinkeln erfasst wurden, wie folgt vorgegangen werden: Die einzelnen Farbkanäle des Bildes sind unterschiedlichen Wellenlängen zugeordnet. Beispielsweise können die Farbkanäle unterschiedle Schwerpunkte des Detektionsspektrums aufweisen. Entsprechend kann jedem der Farbkanäle eine Fokuslage zugeordnet werden, die sich für die jeweilige Wellenlänge ergibt.

Abhängig von dem Abstand der Fokuslage eines Farbkanals zur Fokuslage eines weiteren Farbkanals wird eine örtliche Verschiebung quer zur optischen Achse ermittelt. Die Verschiebung ergibt sich aus dem z-Defokus in Kombination mit der Beleuchtung unter dem Beleuchtungswinkel. Die Verschiebung kann abhängig von der Beleuchtungsrichtung unterschiedliche Richtungen in der Bildebene aufweisen. Eine Richtung der Verschiebung kann davon abhängen, ob der Farbkanal relativ zu dem weiteren Farbkanal intrafokal oder extrafokal verschoben ist. Beispielsweise können die Verschiebungen für zwei von drei Farbkanälen eines RGB-Bildsensors in entgegengesetzte Richtungen zeigen, wenn einer der Farbkanäle relativ zu dem weiteren Farbkanal, für den eine Fokussierung auf die Ebene des Bildsensors erfolgt, intrafokal verschoben ist, und ein anderer der Farbkanäle relativ zu dem weiteren Farbkanal, für den eine Fokussierung auf die Ebene des Bildsensors erfolgt, extrafokal verschoben ist

Ein oder mehrere Farbkanäle des Bildes, d.h. ein oder mehrere Bildkanäle, werden gemäß der ermittelten Verschiebung verschoben. Auf diese Weise kann der durch die Defokussierung verursachte seitliche Versatz zwischen Farbkanälen kompensiert werden. Dazu können in einer rechnerischen Verarbeitung alle Pixel des entsprechenden Farbkanals örtlich relativ zu den Pixeln eines weiteren Farbkanals verschoben werden. Es ist nicht unbedingt erforderlich, dass alle Bildkanäle verschoben werden. Beispielsweise können drei Bildkanäle für R, G, B vorhanden sein. Die Optik des Bildaufnahmesystems kann automatisch so eingestellt, dass für einen der Farbkanäle eine Fokussierung genau auf die Ebene des Bildsensors erfolgt. Nur die beiden anderen Farbkanäle können dann zur Farblängsfehlerkorrektur relativ zu diesem Farbkanal verschoben werden.

Falls insgesamt m Farbkanäle für jedes Bild vorhanden sind, können m-1 der Farbkanäle bei der Farblängsfehlerkorrektur verschoben werden. Die Verschiebung kann dabei für unterschiedliche Farbkanäle unterschiedlich sein und kann jeweils vom z-Defokus für den entsprechenden Farbkanal abhängen. Der Defokus-Einfluss der Beleuchtung kann durch die Farblängsfehlerkorrektur korrigiert werden.

Die Mehrzahl von Bildern kann nach der Bildkorrektur weiter verarbeitet werden. Beispielsweise kann die Mehrzahl von Bildern aufsummiert werden, um ein Ergebnisbild zu erzeugen.

FIG. 4 und FIG. 5 veranschaulichen die zur Farblängsfehlerkorrektur verwendeten Größen. Chromatische Aberration führt zu einer ersten Fokuslage 52 für Licht einer ersten Wellenlänge 51, zu einer davon verschiedenen zweiten Fokuslage 54 für Licht einer zweiten Wellenlänge 53, und zu einer davon verschiedenen dritten Fokuslage 56 für Licht einer dritten Wellenlänge 55. Die Fokuslagen 52, 54, 56 können rechnerisch ermittelt oder gemessen werden, bevor die Bildaufnahmevorrichtung 1 zur Abbildung des Objekts verwendet wird. Die Fokuslagen können beispielsweise die Fokuslagen in Nähe des Bildsensors oder in einer Zwischenbildebene sein.

Die erste Wellenlänge, für die die erste Fokuslage 52 resultiert, kann die Schwerpunktwellenlänge des Detektionsbands eines ersten Farbkanals des Bildsensors 15 sein. Die erste Wellenlänge kann alternativ auch eine andere charakteristische Wellenlänge des Detektionsbands des ersten Farbkanals sein, beispielsweise die Wellenlänge, für die die Sensitivität maximal ist. Die zweite Wellenlänge, für die die zweite Fokuslage 54 resultiert, kann die Schwerpunktwellenlänge des Detektionsbands eines zweiten Farbkanals des Bildsensors 15 sein. Die zweite Wellenlänge kann alternativ auch eine andere charakteristische Wellenlänge des Detektionsbands des zweiten Farbkanals sein, beispielsweise die Wellenlänge, für die die Sensitivität maximal ist. Die dritte Wellenlänge, für die die dritte Fokuslage 56 resultiert, kann die Schwerpunktwellenlänge des Detektionsbands eines dritten Farbkanals des Bildsensors 15 sein. Die dritte Wellenlänge kann alternativ auch eine andere charakteristische Wellenlänge des Detektionsbands des dritten Farbkanals sein, beispielsweise die Wellenlänge, für die die Sensitivität maximal ist.

FIG. 5 veranschaulicht die Punktspreizfunktionen für die unterschiedlichen Wellenlängen aufgrund von Farblängsfehlern der Beleuchtungseinrichtung. Eine Punktspreizfunktion 61 für Licht der ersten Wellenlänge hat in einer z-Ebene 60 minimalen Durchmesser. Die z-Ebene 60 kann beispielsweise die Ebene des Bildsensors oder eine Zwischenbildebene des Systems sein. Eine Punktspreizfunktion 63 für Licht der zweiten Wellenlänge hat in einer Ebene 62 minimalen Durchmesser. D.h., es existiert ein z-Defokus 66, der dem Abstand zwischen den Ebenen 60, 62 entspricht. Eine Punktspreizfunktion 65 für Licht der dritten Wellenlänge hat in einer Ebene 64 minimalen Durchmesser. D.h., es existiert ein z-Defokus 67, der dem Abstand zwischen den Ebenen 60, 64 entspricht.

Bei Beleuchtung unter verschiedenen Beleuchtungswinkeln führt der z-Defokus 66, 67 zu einer lateralen Verschiebung unterschiedliche Farbkanäle relativ zueinander. Der Abbildungsfehler kann durch Verschiebung der Daten eines oder mehrerer Farbkanäle in der Bildebene relativ zu den Daten eines weiteren Farbkanals reduziert werden.

Der Detektor 14 ist so ausgestaltet, dass seine Detektor-Schärfentiefe größer als der z-Defokus 66, 67 ist. Dann kann die nachfolgend ausführlicher beschriebene Bildkorrektur ausgeführt werden, um Farblängsfehler rechnerisch effizient zu verringern.

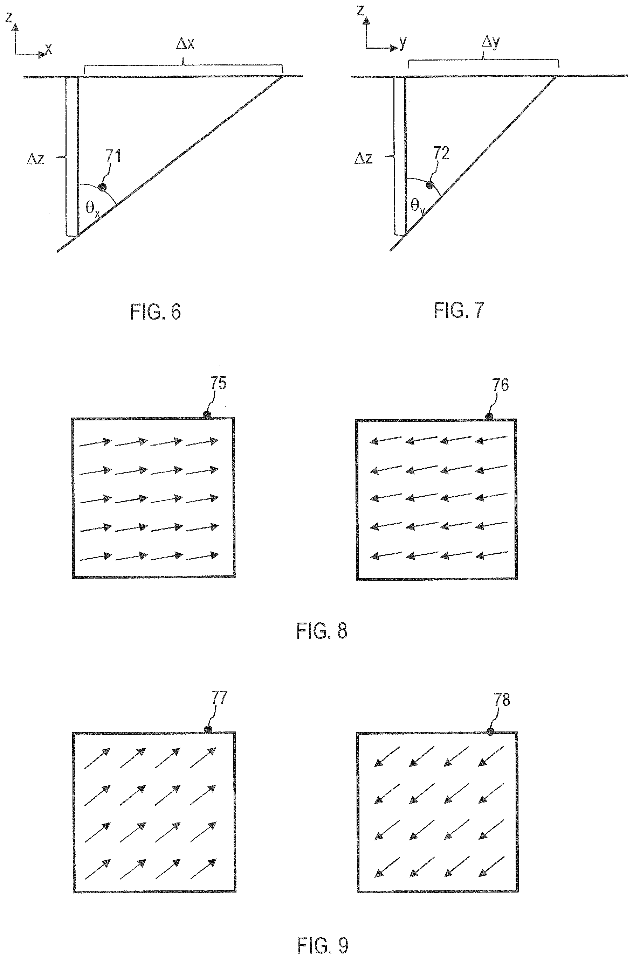

FIG. 6 und FIG. 7 veranschaulichen die Bestimmung der Verschiebung von Pixeln eines Farbkanals, die bei der Bildkorrektur ausgeführt werden kann. Der Defokus $\Delta z$, der für eine Wellenlänge durch Farblängsfehler verursacht wird, kann durch eine Verschiebung der Pixel eines Farbkanals, der bei der entsprechenden Wellenlänge sensitiv ist, um

$$\Delta x_j = sf \cdot \tan(\theta_x) \cdot \Delta z_j \qquad (1)$$

in der x-Richtung und um

$$\Delta y_j = sf \cdot \tan(\theta_y) \cdot \Delta z_j \qquad (2)$$

in der y-Richtung korrigiert werden. Dabei bezeichnet j einen Index für den Farbkanal. Der Wert $\Delta z_j$ bezeichnet den Abstand zwischen der Fokuslage der Wellenlänge, die beispielsweise die Schwerpunktwellenlänge des Farbkanals j sein kann, und einem davon verschiedenen Referenz-Farbkanal, dessen Fokuslage mit der z-Ebene übereinstimmend gewählt sein kann. Der Faktor sf ist ein Skalierungsfaktor. Mit dem Skalierungsfaktor kann eine Umrechnung zwischen Abständen in der Zwischenbildebene, die von dem Detektor in die Ebene des Bildsensors abgebildet wird, in Abstände in der Ebene des Bildsensors erfolgen. Der Skalierungsfaktor kann ein negatives Vorzeichen aufweisen. Für eine Rekonstruktion des Objekts kann der Skalierungsfaktor auch einen Betrag aufweisen, der gleich eins ist.

Der Winkel $\theta_x$ bezeichnet den Beleuchtungswinkel in der x-z-Ebene. Der Winkel $\theta_x$ kann beispielsweise bestimmt werden aus der Projektion eines unter dem Beleuchtungswinkel einfallenden Strahls in die x-z-Ebene. Der Winkel $\theta_x$ kann dem Winkel zwischen der Projektion eines unter dem Beleuchtungswinkel einfallenden Strahls in die x-z-Ebene und der z-Achse, die die optische Achse definiert. Der Winkel $\theta_y$ bezeichnet den Beleuchtungswinkel in der y-z-Ebene. Der Winkel $\theta_y$ kann beispielsweise bestimmt werden aus der Projektion eines unter dem Beleuchtungswinkel einfallenden Strahls in die y-z-Ebene. Der Winkel $\theta_y$ kann dem Winkel zwischen der Projektion eines unter dem Beleuchtungswinkel einfallenden Strahls in die y-z-Ebene und der z-Achse, die die optische Achse definiert.

Falls der Bildsensor mehr als zwei Farbkanäle aufweist, können die Fokuslagen für die Wellenlängen, die für einen ersten und einen dritten Farbkanal charakteristisch sind, auf unterschiedlichen Seiten zu der Ebene angeordnet sein, die senkrecht zu der optischen Achse ist und in der der Fokus für die Wellenlänge, die für den zweiten Farbkanal charakteristisch ist, angeordnet ist. In diesem Fall kann die Bildaufnahmevorrichtung so eingestellt werden, dass die Fokuslage für die Wellenlänge, die für den zweiten Farbkanal charakteristisch ist, die z=0-Ebene definiert, die auf den Bildsensor fokussiert wird. Die Pixel des ersten Farbkanals und die Pixel des dritten Farbkanals können jeweils relativ zu den Pixeln des zweiten Farbkanals in der x-y-Ebene des Bildsensors verschoben werden. Der Defokus $\Delta z_j$ hat in einem solchen Fall, wie er beispielhaft in FIG. 4 und FIG. 5 dargestellt ist, unterschiedliche Vorzeichen für den ersten Farbkanal (j=1) und den dritten Farbkanal (j=3) auf. Das im ersten Farbkanal erfasste Bild und das im dritten Farbkanal erfasste Bild können in entgegengesetzte Richtungen verschoben werden, um Farblängsfehler zu korrigieren. Die Richtung der Verschiebung kann jeweils von der durch die Winkel $\theta_x$ und $\theta_y$ definierten Beleuchtungsrichtung abhängen. Der Betrag der Verschiebung kann unterschiedlich sein, falls der Betrag des Defokus für den ersten Farbkanal und den dritten Farbkanal unterschiedlich ist. In diesem Fall kann der Betrag der Verschiebung proportional abhängig vom Defokus für den jeweiligen Farbkanal eingestellt werden.

FIG. 8 zeigt schematisch ein Verschiebungsfeld 75, das auf Pixel eines Farbkanals eines Bildes für einen ersten Beleuchtungswinkel angewandt wird. Alle Pixel können um dieselbe Verschiebung in x- und y-Richtung verschoben werden. Ein anderes Verschiebungsfeld 76 kann von der elektronischen Auswerteeinrichtung auf Pixel eines anderen Farbkanals desselben Bildes angewandt werden. Pixel eines weiteren Farbkanals können unverschoben bleiben, wenn der Defokus für diesen weiteren Farbkanal gleich Null ist. Das Verschiebungsfeld 75 und das andere Verschiebungsfeld 76 können Verschiebungen in um 180° gedrehte Richtungen definieren. Dies kann insbesondere der Fall sein, falls die chromatische Aberration für eine der Wellenlängen zu einem intrafokal verschobenen Zwischenbild und für eine andere der Wellenlängen zu einem extrafokal verschobenen Zwischenbild führt.

FIG. 9 zeigt schematisch die Verschiebungsfelder 77, 78, die angewandt werden, wenn das Bild mit einer Beleuchtung unter einem anderen Beleuchtungswinkel aufgenommen wird. Die Verschiebung ändert sich mit dem Beleuchtungswinkel. Die Richtung und der Betrag der Verschiebung können für unterschiedliche Beleuchtungswinkel unterschiedlich sein.

Während in FIG. 8 und FIG. 9 schematisch Verschiebungsfelder dargestellt sind, die konstant in der Ebene des Bildsensors sind, also eine Verschiebung aller Pixel eines Farbkanals um denselben, von dem Beleuchtungswinkel abhängigen Vektor definieren, kann die Verschiebung auch räumlich variieren. Durch ein derartiges räumlich variierendes Verschiebungsfeld, das die auf Pixel eines Bildes oder eines Farbkanals des Bildes angewandte Transformation definiert, kann beispielsweise auch ein Astigmatismus oder eine Bildfeldwölbung korrigiert werden.

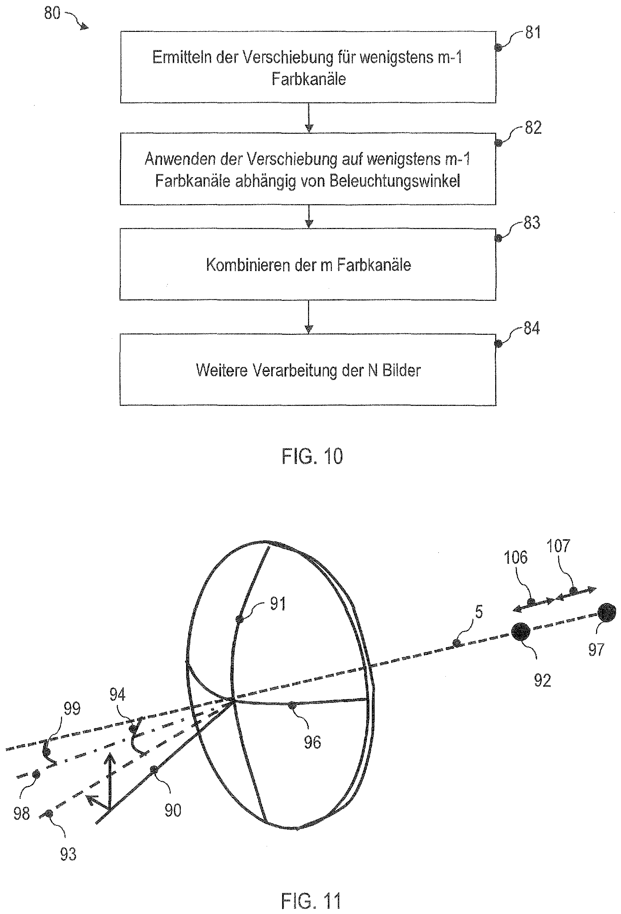

FIG. 10 ist ein Flussdiagramm eines Verfahrens 80 zur Farblängsfehlerkorrektur. Das Verfahren kann von der elektronischen Auswerteeinrichtung 20 automatisch ausgeführt werden. Der Detektor kann m Farbkanäle aufweisen. Die Bildaufnahmevorrichtung kann so eingestellt werden, dass für einen der Farbkanäle kein Defokus vorliegt.

Bei Schritt 81 kann ermittelt werden, um welchen Versatz die Daten jedes der wenigstens m-1 Farbkanäle verschoben werden, für die der Defokus nicht gleich Null ist. Der Versatz hängt vom Beleuchtungswinkel bei der Aufnahme des Bildes ab. Der Versatz kann beispielsweise gemäß Gleichungen (1) und (2) definiert sein.

Der Versatz, der aus dem Farblängsfehler resultiert, und die diesen rechnerisch wieder korrigierende Verschiebung kann auf unterschiedliche Weise ermittelt werden. Bei einer Ausgestaltung kann Information über die Fokuslage der Wellenlängen, die unterschiedlichen Farbkanälen zugeordnet sind, in einem Speichermedium der Bildaufnahmevorrichtung nichtflüchtig gespeichert sein. Die elektronische Auswerteeinrichtung kann die Verschiebung dann berechnen. Bei einer weiteren Ausgestaltung kann die Verschiebung selbst bereits kennfeldbasiert gespeichert sein. Zahlreiche weitere Ausgestaltungen sind möglich, bei denen die elektronische Auswerteeinrichtung vorab ermittelte Informationen über chromatische Aberrationen verwendet, um die Bildkorrektur auszuführen. Beispielsweise kann eine lineare Abbildung nichtflüchtig gespeichert sein, die für mehrere Farbkanäle und mehrere Beleuchtungswinkel jeweils definiert, wie Pixel des aufgenommenen Bildes in Pixel des korrigierten Bildes abgebildet werden.

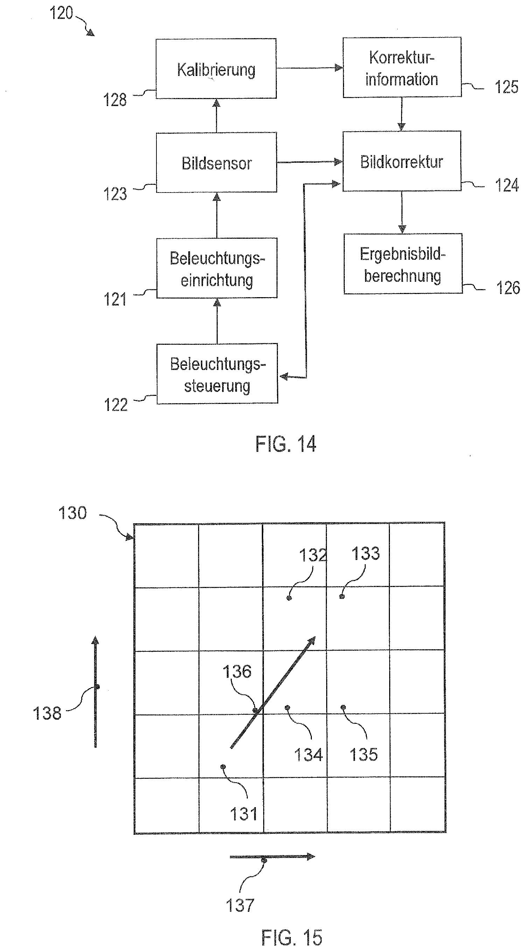

Bei Schritt 82 werden mehrere Farbkanäle verschoben. Beispielsweise können zwei von den R-, G- und B-Bildkanälen relativ zu einem dieser Bildkanäle verschoben werden. Dabei können beispielsweise alle Pixel des R-Bildkanals um dieselbe Anzahl von Pixeln in die x- und y-Richtung relativ zu den Pixeln des G-Bildkanals verschoben werden. Es können alle Pixel des B-Bildkanals um dieselbe Anzahl von Pixeln in die x- und y-Richtung relativ zu den Pixeln des G-Bildkanals verschoben werden. Die Verschiebung für den R-Bildkanal und den B-Bildkanal kann in Richtung und/oder Betrag unterschiedlich sein. Die Verschiebung kann so durchgeführt werden, dass mit Ausnahme der Pixel am Bildrand Pixel aus den in der Bildebene verschobenen Bildkanälen wieder deckungsgleich mit Pixeln des unverschobenen Bildkanal angeordnet sind. Dazu kann beispielsweise eine Rundung und/oder eine Interpolation ausgeführt werden, wie anhand von FIG. 15 noch ausführlicher beschrieben wird.

Bei Schritt 83 kann das für die Beleuchtungsrichtung resultierende korrigierte Bild ermittelt werden.

Schritte 81 bis 83 können für jedes von N Bildern ausgeführt werden, die für N unterschiedliche Beleuchtungswinkel erfasst wurde, wobei N > 2 und insbesondere N >> 2 sein kann.

Bei Schritt 84 können die N Bilder nach der Bildkorrektur kombiniert werden. Die Bilder können aufsummiert werden. Es können Amplituden- und/oder Phaseninformationsbilder im Ortsraum oder im Fourierraum ermittelt werden.

Die Bildaufnahmevorrichtung und Verfahren nach Ausführungsbeispielen können alternativ oder zusätzlich zur Farblängsfehlerkorrektur auch zur Korrektur anderer Abbildungsfehler eingesetzt werden, beispielsweise zur Korrektur eines Astigmatismus, wie anhand von FIG. 11 bis FIG. 13 näher beschrieben wird.

FIG. 11 zeigt eine Teilansicht einer Bildaufnahmevorrichtung nach einem Ausführungsbeispiel, bei der eine nur schematisch dargestellte Optik, beispielsweise der Beleuchtungseinrichtung, einen Astigmatismus aufweist. Ein erster Meridian 91 verläuft in einer ersten Ebene des Astigmatismus. Die erste Ebene des Astigmatismus kann eine erste Fokuslage 92 definieren. Ein zweiter Meridian 96 verläuft in einer zweiten Ebene des Astigmatismus. Die zweite Ebene des Astigmatismus kann eine zweite Fokuslage 97 definieren. Die erste Ebene kann diejenige Ebene sein, für die sich eine minimale Fokuslänge ergibt. Die zweite Ebene kann diejenige Ebene sein, für die sich eine maximale Fokuslänge ergibt.

Eine oder mehrere der Fokuslagen 92, 97 können gegenüber der z=0-Ebene, die von dem Detektor scharf abgebildet wird, verschoben sein. Die Fokuslagen 92, 97 können einen z-Defokus 106, 107 entlang der optischen Achse aufweisen. Der z-Defokus kann feldpunktabhängig variieren.

Bei Beleuchtung des Objekts unter einem Beleuchtungswinkel kann Licht entlang eines Strahls 90 einfallen, dessen Richtung durch den jeweils eingestellten Beleuchtungswinkel festgelegt ist. Zur Astigmatismuskorrektur kann eine Projektion in die Ebenen des Astigmatismus erfolgen. Diese Ebenen können jeweils durch einen Meridian einer optischen Komponente und die optische Achse definiert sein, wobei unterschiedliche Meridiane unterschiedlichen Fokusebenen zugeordnet sind. Eine Projektion 93 des unter dem Beleuchtungswinkel einfallenden Strahls 90 in die erste Ebene schließt einen Winkel 94 mit der optischen Achse 5 ein. Der Winkel 94 kann auch als Winkel $\theta_a$ bezeichnet werden. Eine Projektion 98 des unter dem Beleuchtungswinkel einfallenden Strahls 90 in die zweite Ebene schließt einen Winkel 99 mit der optischen Achse 5 ein. Der Winkel 99 kann auch als Winkel $\theta_b$ bezeichnet werden. Die durch die erste Ebene des Astigmatismus definierte Ebene muss nicht mit der x- oder y-Achse des Bildsensors zusammenfallen. Durch eine an sich bekannte Koordinatentransformation in der Ebene des Bildsensors können jedoch die Koordinatenachsen auch so definiert werden, dass beispielsweise die Schnittlinie der ersten Ebene des Astigmatismus mit der Ebene des Bildsensors der x-Achse entspricht und dass die Schnittlinie der ersten Ebene des Astigmatismus mit der Ebene des Bildsensors der y-Achse entspricht.

Zur Astigmatismuskorrektur können die Pixel eines Bildes um eine Verschiebung relativ zu den Pixeln eines weiteren Bildes verschoben werden. Die Verschiebung kann von dem Beleuchtungswinkel abhängen. Die Verschiebung kann von dem z-Defokus 106, 107 abhängen, der sich für die mehreren Ebenen des Astigmatismus ergibt.

Die Verschiebung in der Ebene des Bildsensors kann beispielsweise definiert sein durch

$$sf \cdot \tan(\theta_a) \cdot \Delta z_a \qquad (3)$$

in der Richtung, die durch die Schnittlinie der ersten Ebene des Astigmatismus mit der Sensorebene definiert ist, und um

$$sf \cdot \tan(\theta_b) \cdot \Delta z_b \qquad (4)$$

in der Richtung, die durch die Schnittlinie der zweiten Ebene des Astigmatismus mit der Sensorebene definiert ist. Dabei bezeichnet $\Delta z_a$ den z-Defokus 106 für die erste Ebene des Astigmatismus, $z_b$ den z-Defokus für die zweite Ebene des Astigmatismus und sf einen Skalierungsfaktor zur Umrechnung einer aus dem z-Defokus resultierenden Verschiebung in der Zwischenbildebene in eine Verschiebung in der Ebene des Bildsensors. Der Skalierungsfaktor sf ist durch die Bildaufnahmevorrichtung festgelegt und kann beispielsweise rechnerisch oder in einer Kalibrierungsmessung ermittelt werden.

Falls die Ebenen des Astigmatismus relativ zu den x- und y-Koordinatenachsen des Bildsensors verkippt sind, kann die Verschiebung in den x- und y-Koordinatenachsen des Bildsensors durch eine entsprechende Transformation ermittelt werden. Falls beispielsweise die Schnittlinie der ersten Ebene des Astigmatismus mit der x-Achse des Bildsensors einen Winkel $\phi$ einschließt und die Schnittlinie der ersten Ebene des Astigmatismus mit der y-Achse des Bildsensors den Winkel $\phi$ einschließt, können die Koordinaten der Verschiebung ermittelt werden als:

$$\Delta x = \cos(\phi) \cdot sf \cdot \tan(\theta_a) \cdot \Delta z_a + \sin(\phi) \cdot sf \cdot \tan(\theta_b) \cdot \Delta z_b \qquad (5)$$

in der x-Richtung und um

$$\Delta y = \cos(\phi) \cdot sf \cdot \tan(\theta_b) \cdot \Delta z_b - \sin(\phi) \cdot sf \cdot \tan(\theta_a) \cdot \Delta z_a \qquad (6)$$

in der y-Richtung.

Es kann dieselbe Verschiebung auf dasselbe Pixel aller Farbkanäle angewandt werden. Falls auch chromatische Aberrationen korrigiert werden, können die Verschiebungen für unterschiedliche Farbkanäle unterschiedlich sein, wie unter Bezugnahme auf FIG. 3 bis FIG. 10 beschrieben wurde.

Eine Feldpunktabhängigkeit des Astigmatismus kann durch eine feldpunktabhängige Verschiebung von Pixeln berücksichtigt werden. Das Feld von Verschiebungsvektoren, um die Pixelwerte in der Ebene des Bildsensors verschoben werden, kann in der Ebene des Bildsensors veränderlich sein.

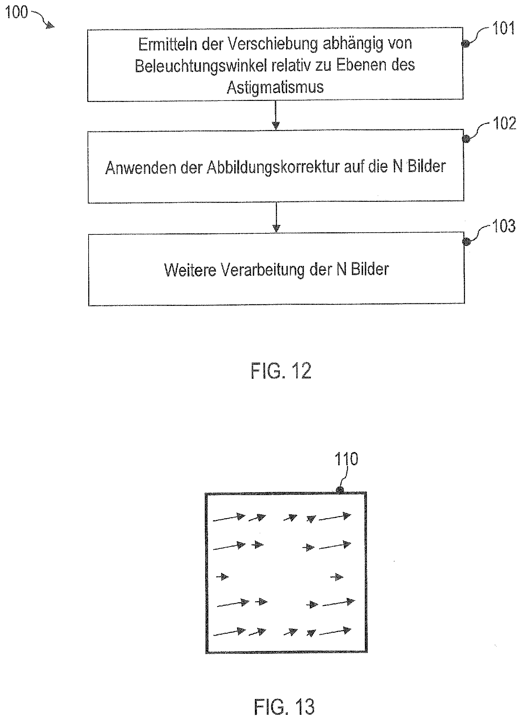

FIG. 12 ist ein Flussdiagramm eines Verfahrens 100. Das Verfahren 100 kann von der Bildaufnahmevorrichtung 1 automatisch ausgeführt werden.

Bei Schritt 101 werden die Verschiebungen ermittelt, die zur Astigmatismuskorrektur auf Pixel eines Bildes anzuwenden sind, das bei Beleuchtung unter einem Beleuchtungswinkel erfasst wurde.

Zur Ermittlung der Verschiebung kann der Beleuchtungswinkel in die durch den Astigmatismus definierten Ebenen projiziert werden, wie dies unter Bezugnahme auf FIG. 11 beschrieben wurde. Aus dem Abstand der Fokuslagen der minimalen und maximalen Fokuslänge des astigmatischen Systems zu der Ebene, auf die der Detektor fokussiert ist, in Kombination mit der Projektion des Beleuchtungswinkels in die zugehörigen Ebenen des Astigmatismus kann die auf das Bild anzuwendende Verschiebung ermittelt werden.

Die zur Bildkorrektur benötigte Information kann in unterschiedlicher Weise nichtflüchtig in der Bildaufnahmevorrichtung gespeichert sein. Die anzuwendenden Verschiebungen können als Kennfeld in Abhängigkeit von dem Beleuchtungswinkel gespeichert sein. Es kann Information über die Fokuslängen des optischen Systems, das den Astigmatismus aufweist, in Kombination mit Information über die Lage der Ebenen des Astigmatismus gespeichert sein. Die elektronische Auswerteeinrichtung kann diese Information rechnerisch weiterverarbeiten, um bei der Bildkorrektur zu ermitteln, wie die Pixel des Bildes zu verschieben sind. Es kann auch eine lineare Abbildung für jeden von mehreren Beleuchtungswinkeln gespeichert sein, die definiert, wie Pixel des unter einem Beleuchtungswinkel aufgenommenen Bildes in Pixel des korrigierten Bildes abgebildet werden.

Schritt 101 kann für jedes von N Bildern ausgeführt werden, die mit Beleuchtung unter N unterschiedlichen Beleuchtungswinkeln erfasst wurden.

Bei Schritt 102 wird die jeweils ermittelte Verschiebung auf ein Bild angewandt. Die Verschiebung kann so durchgeführt werden, dass mit Ausnahme der Pixel am Bildrand Pixel aus dem in der Bildebene verschobenen Bild wieder deckungsgleich mit Pixeln des Bildsensors angeordnet sind. Dazu kann beispielsweise eine Rundung und/oder eine Interpolation ausgeführt werden, wie anhand von FIG. 15 noch ausführlicher beschrieben wird. Schritt 102 kann so ausgeführt werden, dass für jedes der N Bilder die dem Beleuchtungswinkel zugeordnete Bildkorrektur zur Astigmatismuskorrektur ausgeführt wird

Bei Schritt 103 können die N Bilder nach der Bildkorrektur kombiniert werden. Die Bilder können aufsummiert werden. Es können Amplituden- und/oder Phaseninformationsbilder im Ortsraum oder im Fourierraum ermittelt werden.

FIG. 13 veranschaulicht ein Verschiebungsfeld 110, mit dem Pixel eines Bildes in der Bildebene verschoben werden können, um beispielsweise den Einfluss unterschiedlicher Fokuslängen in einem optischen System mit Astigmatismus zu korrigieren.

Das Verschiebungsfeld 110 kann eine Verschiebung definieren, die in der Ebene des Bildes ortsabhängig veränderlich ist. Eine Richtung und/oder ein Betrag des Verschiebungsvektors können örtlich veränderlich sein. Dadurch können auch ortsabhängig veränderlichen Verzeichnungen, die durch einen Astigmatismus hervorgerufen werden, korrigiert werden.

Während unter Bezugnahme auf FIG. 1 bis FIG. 13 beispielhaft Bildaufnahmevorrichtungen und Verfahren beschrieben wurden, mit denen eine Farblängsfehlerkorrektur und eine Astigmatismuskorrektur ausgeführt werden kann, können die hier beschriebenen Techniken auch zur Korrektur anderer Fehler, beispielsweise zur Korrektur einer Bildfeldwölbung, verwendet werden.

FIG. 14 ist ein Blockdiagramm 120 einer Bildaufnahmevorrichtung nach einem Ausführungsbeispiel. Die Bildaufnahemvorrichtung kann zur automatischen Farblängsfehlerkorrektur und/oder Astigmatismuskorrektur eingerichtet sein.

Die Bildaufnahmevorrichtung umfasst eine Beleuchtungseinrichtung 121, die steuerbar ist. Mit der Beleuchtungseinrichtung 121 kann das Objekt sequentiell unter mehreren verschiedenen Beleuchtungswinkeln beleuchtet werden. Eine Beleuchtungssteuerung 122 kann die sequentiell eingestellten Beleuchtungswinkel steuern. Die Beleuchtungseinrichtung 121 kann eine LED-Anordnung umfassen. Die Beleuchtungseinrichtung 121 kann ein steuerbares optisches Element in einer Zwischenbildebene umfassen, das beispielsweise eine bewegliche Lochblende, eine Mikrospiegelanordnung, eine Flüssigkeitskristallmatrix oder einen räumlichen Lichtmodulator umfassen kann.

Ein Bildsensor 123 erfasst für jeden der Beleuchtungswinkel, unter denen das Objekt beleuchtet wird, wenigstens ein Bild. Das Bild kann Information in mehreren Farbkanälen umfassen. Der Bildsensor 123 kann wenigstens einen CCD- oder CMOS-Chip umfassen.

Ein Modul zur Bildkorrektur 124 kann eine Bildkorrektur ausführen. Die Bildkorrektur kann von dem bei Bildaufnahme verwendeten Beleuchtungswinkel abhängen. Die Bildkorrektur kann eine Verschiebung von Pixeln eines, mehrerer oder aller Farbkanäle des Bildes umfassen. Die Verschiebung kann für alle verschobenen Pixel gleich sein oder kann in der Bildebene örtlich veränderlich sein.

Ein Speichermedium mit Korrekturinformation 125 kann in verschiedenen Formen Information speichern, die von dem Modul zur Bildkorrektur 124 verwendet wird. Die Korrekturinformation kann Information über Fokuslagen für unterschiedliche Wellenlängen und/oder unterschiedliche Ebenen des Astigmatismus beinhalten, aus der von dem Modul zur Bildkorrektur 124 die anzuwendende Verschiebung berechnet wird. Die Korrekturinformation kann die Verschiebung für unterschiedliche Beleuchtungswinkel angeben. Die Korrekturinformation kann eine lineare Abbildung definieren, beispielsweise in Form einer Abbildungsmatrix, nach der bei der Bildkorrektur Pixel des ursprünglichen Bildes in Pixel eines korrigierten Bildes abgebildet werden.

Das Modul zur Bildkorrektur 124 kann als anwendungsspezifische Spezialschaltung, Controller, Mikrocontroller, Prozessor oder Mikroprozessor ausgestaltet sein. Das Modul zur Bildkorrektur 124 kann mit dem Bildsensor 123 in einer baulichen Einheit kombiniert sein, die automatisch korrigierte Bilder errechnet. Dadurch kann die Bildkorrektur in Hardware kodiert sein.

Die Bildaufnahmevorrichtung kann so eingerichtet sein, dass die Korrekturinformation durch Messung an der Bildaufnahmevorrichtung selbst ermittelt wird. Die Bildaufnahmevorrichtung kann ein Modul zur Kalibrierung 128 umfassen, das automatisch die Korrekturinformation ermittelt. Dazu können Aufnahmen an mehreren bekannten Referenzobjekten gemacht und rechnerisch weiterverarbeitet werden, um zu bestimmen, wie die Bilder korrigiert werden müssen, um ein Objekt zu rekonstruieren.

Die Bildaufnahmevorrichtung kann ein Modul zur Bildkombination 126 umfassen, mit dem die N korrigierten Bilder kombiniert werden können. Die nach der Bildkorrektur ermittelten Bilder können aufsummiert oder anderweitig weiter verarbeitet werden, um eine Ergebnisbild zu bestimmen.

Die Bildaufnahmevorrichtung kann weitere Einheiten umfassen. Beispielsweise kann eine Einheit zur Autofokuseinstellung vorhanden sein. Die Einheit zur Autofokuseinstellung kann die Parallaxe, die für unterschiedliche Beleuchtungswinkel resultiert, als Eingangsgröße verwenden.

Allgemein wird zur Verschiebung ein korrigiertes Bild $I_c$ aus einem Bild I ermittelt, wobei

$$I_c(u, v; j) = I(u - \Delta x_j, v - \Delta y_j; j). \quad (7)$$

Dabei bezeichnen u und v Pixelkoordinaten entlang der x- und y-Richtung des Bildsensors. Der Index j kann einen Farbkanal bezeichnen. Die Verschiebungen können vom Farbkanal abhängig sein, wenn chromatische Aberrationen korrigiert werden sollen, oder können unabhängig vom Farbkanal sein.

Da die nach Gleichungen (1) bis (6) ermittelten Verschiebungen nicht notwendig eine Verschiebung um eine ganzzahlige Pixelanzahl definieren, können Rundungs- oder Interpolationsoperationen ausgeführt werden, um sicherzustellen, dass ein konsistentes Pixelkoordinatensystem für unterschiedliche Bilder und/oder unterschiedliche Farbkanäle verwendet wird.

Beispielsweise kann eine Rundung vorgesehen sein, so dass das korrigierte Bild nach

$$I_c(u, v; j) = I(u - \mathrm{round}(\Delta x_j), v - \mathrm{round}(\Delta y_j); j) \quad (8)$$

ermittelt wird. Dabei bezeichnet round(·) die Rundungsfunktion. Es können auch die Abrundungsfunktion $\lfloor\cdot\rfloor$ oder die Aufrundungsfunktion $\lceil\cdot\rceil$ anstelle der Rundungsfunktion in Gleichung (8) verwendet werden. Die Rundung kann bereits berücksichtigt sein, wenn die Verschiebung nichtflüchtig in der Bildaufnahmevorrichtung gespeichert ist.

Es kann auch eine Interpolation zwischen unterschiedlichen Pixelwerten vorgenommen werden. Dabei können beispielsweise vier Pixelwerte oder auch mehr als vier Pixelwerte interpoliert werden, um das verschobene Bild bei der Bildkorrektur zu ermitteln.

FIG. 15 veranschaulicht die Verschiebung von Pixeln bei der Bildkorrektur. Der Bildsensor weist eine Anordnung von Pixeln 130 auf. Der beispielsweise nach Gleichungen (1) bis (6) ermittelte Verschiebungsvektor 136 kann derart sein, dass die Komponenten des Verschiebungsvektors 136 keine ganzzahligen Vielfachen der Pixelabstände in die zwei Koordinatenrichtungen 137, 138 sind. Bei Anwendung einer Rundungsoperation kann beispielsweise eine Verschiebung des Pixels 131 in das Pixel 132 erfolgen. Bei einer Interpolation können die Pixelwerte der Pixel 132-135 linear interpoliert werden, um den Pixelwert für das Pixel 131 im korrigierten Bild zu ermitteln.

Während Ausführungsbeispiele unter Bezugnahme auf die Figuren beschrieben wurden, können Abwandlungen bei weiteren Ausführungsbeispielen realisiert werden. Während die Bildaufnahmevorrichtung nach Ausführungsbeispielen insbesondere ein Mikroskopsystem sein kann, können die beschriebenen Techniken auch bei anderen Abbildungssystemen verwendet werden. Während die beschriebenen Techniken zur Farblängsfehlerkorrektur und/oder Astigmatismuskorrektur verwendet werden können, können alternativ oder zusätzlich auch andere Abbildungsfehler korrigiert werden. Die korrigierten Bilder können auf eine Vielzahl unterschiedlicher Weisen miteinander kombiniert werden. Beispielsweise können die korrigierten Bilder für eine Fourier-Ptychographie verwendet werden oder zur Ermittlung eines Ergebnisbildes aufaddiert werden.

## Patentansprüche

**1.** Bildaufnahmevorrichtung, umfassend:

eine Beleuchtungseinrichtung (11, 12; 121), die steuerbar ist, um eine Mehrzahl von Beleuchtungswinkeln (4) für eine Beleuchtung eines Objekts (2) einzustellen;
einen Detektor mit einem Bildsensor (15; 123), der eingerichtet ist, um eine Mehrzahl von Bildern (41-43) des Objekts (2) für die Mehrzahl von Beleuchtungswinkeln (4) zu erfassen;
eine elektronische Auswerteeinrichtung (20; 124-126) zur Verarbeitung der Mehrzahl von Bildern, die mit dem Bildsensor (15; 123) gekoppelt ist, wobei die elektronische Auswerteeinrichtung (20; 124-126) eingerichtet ist,

um wenigstens auf einen Teil der Mehrzahl von Bildern (41-43) eine Bildkorrektur anzuwenden, die eine Verschiebung ($T_1$, $T_2$; 75-78; 110) umfasst, und
um die Mehrzahl von Bildern nach der Bildkorrektur (44-46) zu kombinieren, wobei der Bildsensor (15; 123) mehrere Farbkanäle aufweist,

die Verschiebung (T1, T2; 75-78; 110) von dem jeweiligen Farbkanal und dem Beleuchtungswinkel (4) bei der Aufnahme des jeweiligen Bildes abhängt, und
die Verschiebung (T1, T2; 75-78; 110) für einen Farbkanal von einem Abstand (66, 67) zwischen einer Fokuslage (54, 56) für den Farbkanal und einer weiteren Fokuslage (52) für einen weiteren Farbkanal abhängt.

**2.** Bildaufnahmevorrichtung nach Anspruch 1,
wobei die elektronische Auswerteeinrichtung (20; 124-126) eingerichtet ist, um durch die Verarbeitung Farblängsfehler zu korrigieren.

**3.** Bildaufnahmevorrichtung nach Anspruch 1 oder 2,
wobei der Abstand (66, 67) und/oder die Fokuslage (54, 56) nichtflüchtig in einem Speichermedium (21) der Bildaufnahmevorrichtung gespeichert sind.

**4.** Bildaufnahmevorrichtung nach einem der vorhergehenden Ansprüche,
wobei die elektronische Auswerteeinrichtung (20; 124-126) eingerichtet ist, um einen Astigmatismus zu korrigieren.

**5.** Bildaufnahmevorrichtung nach Anspruch 4,
wobei die Verschiebung (110), die auf ein unter einem Beleuchtungswinkel (4) erfasstes Bild (41-43) angewandt wird, von einer Lage eines unter dem Beleuchtungswinkel (4) einfallenden Strahls (90) zu einer Ebene, die durch eine Achse des Astigmatismus und eine optische Achse (5) einer Abbildungsoptik definiert ist, abhängt.

**6.** Bildaufnahmevorrichtung nach Anspruch 5,
wobei die Verschiebung (110), die auf ein unter einem Beleuchtungswinkel (4) erfasstes Bild angewandt wird, von der Lage des unter dem Beleuchtungswinkel einfallenden Strahls (90) zu einer ersten Ebene, die durch eine erste Achse des Astigmatismus und die optische Achse (5) definiert ist, und zu einer zweiten Ebene, die durch eine zweite Achse des Astigmatismus und die optische Achse (5) definiert ist, abhängt.

**7.** Bildaufnahmevorrichtung nach Anspruch 6,
wobei eine Komponente der Verschiebung entlang einer ersten Koordinatenachse von einer Projektion (93) des unter dem Beleuchtungswinkel einfallenden Strahls (90) in die erste Ebene abhängt, und
wobei eine Komponente der Verschiebung entlang einer zweiten Koordinatenachse, die zu der ersten Koordinatenachse orthogonal ist, von einer Projektion (98) des unter dem Beleuchtungswinkel einfallenden Strahls (90) in die zweite Ebene abhängt.

**8.** Bildaufnahmevorrichtung nach einem der vorhergehenden Ansprüche,
wobei die elektronische Auswerteeinrichtung (20; 124-126) eingerichtet ist, um eine Bildfeldwölbung zu korrigieren.

**9.** Bildaufnahmevorrichtung nach einem der vorhergehenden Ansprüche,
wobei die Verschiebung (110) feldpunktabhängig ist.

**10.** Bildaufnahmevorrichtung nach einem der vorhergehenden Ansprüche,
wobei für die Mehrzahl von Beleuchtungswinkeln (4) die Verschiebung jeweils nichtflüchtig in einem Speichermedium (21) der Bildaufnahmevorrichtung gespeichert ist.

**11.** Bildaufnahmevorrichtung nach einem der vorhergehenden Ansprüche,
wobei die elektronische Auswerteeinrichtung (20; 124-126) eingerichtet ist, um die Mehrzahl von Bildern nach der Bildkorrektur (44-46) zu addieren, um eine Ergebnisbild (47) zu errechnen.

**12.** Bildaufnahmevorrichtung nach einem der vorhergehenden Ansprüche,
wobei die elektronische Auswerteeinrichtung (20; 124-126) eingerichtet ist, um die Bildkorrektur auf ein Bild (41) anzuwenden, das für einen Beleuchtungswinkel (4) erfasst wurde, während der Detektor ein weiteres Bild (42, 43) für einen weiteren Beleuchtungswinkel erfasst.

**13.** Verfahren zur Bildaufnahme, umfassend:

Erfassen einer Mehrzahl von Bildern (41-43) unter Verwendung eines Bildsensors (15; 123), wenn ein Objekt (2) unter einer Mehrzahl von Beleuchtungswinkeln (4) beleuchtet wird;
Verarbeiten der Mehrzahl von Bildern (41-43), wobei das Verarbeiten umfasst:

Anwenden einer Bildkorrektur auf wenigstens einen Teil der Mehrzahl von Bildern (41-43), wobei die Bildkorrektur eine Verschiebung ($T_1$, $T_2$; 75-78; 110) umfasst, und Kombinieren der Mehrzahl von Bildern nach dem Anwenden der Bildkorrektur (44-46),
wobei die Verschiebung (T1, T2; 75-78; 110) von dem Beleuchtungswinkel bei der Aufnahme des jeweiligen Bildes (41-43) abhängt,

wobei der Bildsensor (15; 123) mehrere Farbkanäle aufweist,
die Verschiebung (T1, T2; 75-78; 110) von dem jeweiligen Farbkanal und dem Beleuchtungswinkel (4) bei der Aufnahme des jeweiligen Bildes abhängt, und
die Verschiebung (T1, T2; 75-78; 110) für einen Farbkanal von einem Abstand (66, 67) zwischen einer Fokuslage (54, 56) für den Farbkanal und einer weiteren Fokuslage (52) für einen weiteren Farbkanal abhängt.

## Claims

1. Image recording apparatus, comprising:

an illumination device (11, 12; 121), which is controllable for setting a plurality of illumination angles (4) for illuminating an object (2);
a detector having an image sensor (15; 123), which is set up to capture a plurality of images (41-43) of the object (2) for the plurality of illumination angles (4);
an electronic evaluation device (20; 124-126) for processing the plurality of images, which is coupled to the image sensor (15; 123), wherein the electronic evaluation device (20; 124-126) is set up for

performing image correction at least on part of the plurality of images (41-43), said image correction comprising a displacement ($T_1$, $T_2$; 75-78; 110), and
combining the plurality of images after the image correction (44-46),

wherein the image sensor (15; 123) has a plurality of colour channels,
the displacement (T1, T2; 75-78; 110) depends on the respective colour channel and the illumination angle (4) during the recording of the respective image, and
the displacement (T1, T2; 75-78; 110) depends for a colour channel on a distance (66, 67) between a focus position (54, 56) for the colour channel and a further focus position (52) for a further colour channel.

2. Image recording apparatus according to Claim 1, wherein the electronic evaluation device (20; 124-126) is set up to correct longitudinal chromatic aberrations through the processing.

3. Image recording apparatus according to Claim 1 or 2,
wherein the distance (66, 67) and/or the focus position (54, 56) are stored in non-volatile fashion in a storage medium (21) of the image recording apparatus.

4. Image recording apparatus according to one of the preceding claims,
wherein the electronic evaluation device (20; 124-126) is set up to correct an astigmatism.

5. Image recording apparatus according to Claim 4,
wherein the displacement (110), which is performed on an image (41-43) captured at an illumination angle (4), depends on a location of a ray (90) that is incident at the illumination angle (4) with respect to a plane that is defined by an axis of the astigmatism and an optical axis (5) of an imaging optical unit.

6. Image recording apparatus according to Claim 5,
wherein the displacement (110), which is performed on an image captured at an illumination angle (4), depends on the location of the ray (90) that is incident at the illumination angle with respect to a first plane that is defined by a first axis of the astigmatism and the optical axis (5) and with respect to a second plane that is defined by a second axis of the astigmatism and the optical axis (5).

7. Image recording apparatus according to Claim 6,
wherein a component of the displacement along a first coordinate axis depends on a projection (93) of the ray (90) that is incident at the illumination angle into the first plane, and
wherein a component of the displacement along a second coordinate axis that is orthogonal to the first coordinate axis depends on a projection (98) of the ray (90) that is incident at the illumination angle into the second plane.

8. Image recording apparatus according to one of the preceding claims,
wherein the electronic evaluation device (20; 124-126) is set up to correct a field of curvature.

9. Image recording apparatus according to one of the preceding claims,
wherein the displacement (110) is field-point-dependent.

10. Image recording apparatus according to one of the preceding claims,
wherein, for the plurality of illumination angles (4), the displacement is stored in each case in non-volatile fashion in a storage medium (21) of the image recording apparatus.

**11.** Image recording apparatus according to one of the preceding claims,
wherein the electronic evaluation device (20; 124-126) is set up for adding up the plurality of images after the image correction (44-46) to calculate a result image (47) .

**12.** Image recording apparatus according to one of the preceding claims,
wherein the electronic evaluation device (20; 124-126) is set up to perform the image correction on an image (41) that was captured for an illumination angle (4) while the detector captures a further image (42, 43) for a further illumination angle.

**13.** Method for image recording, comprising:

capturing a plurality of images (41-43) using an image sensor (15; 123) when an object (2) is illuminated at a plurality of illumination angles (4);
processing the plurality of images (41-43), wherein the processing comprises:

performing an image correction on at least part of the plurality of images (41-43), wherein the image correction comprises a displacement ($T_1$, $T_2$; 75-78; 110), and
combining the plurality of images after the image correction (44-46) is performed,
wherein the displacement (T1, T2; 75-78; 110) depends on the illumination angle during the recording of the respective image (41-43),

wherein the image sensor (15; 123) has a plurality of colour channels,
the displacement (T1, T2; 75-78; 110) depends on the respective colour channel and the illumination angle (4) during the recording of the respective image, and
the displacement (T1, T2; 75-78; 110) for a colour channel depends on a distance (66, 67) between a focus position (54, 56) for the colour channel and a further focus position (52) for a further colour channel.

## Revendications

**1.** Dispositif d'acquisition d'image comprenant :

un moyen d'éclairage (11, 12 ; 121) pouvant être commandé pour régler une pluralité d'angles d'éclairage (4) pour l'éclairage d'un objet (2) ;
un détecteur comprenant un capteur d'image (15 ; 123) conçu pour détecter une pluralité d'images (41-43) de l'objet (2) pour la pluralité d'angles d'éclairage (4) ;
un moyen d'évaluation électronique (20 ; 124-126) pour traiter ladite pluralité d'images, couplé au capteur d'image (15 ; 123), dans lequel le moyen d'évaluation électronique (20 ; 124-126) est conçu
pour appliquer une correction d'image comprenant un déplacement (T1, T2 ; 75-78 ; 110) à au moins une partie de la pluralité d'images (41-43) et
pour combiner la pluralité d'images après la correction d'image (44-46),
dans lequel le capteur d'image (15 ; 123) comporte une pluralité de canaux de couleurs,
le décalage (T1, T2 ; 75-78 ; 110) dépend du canal de couleur respectif et de l'angle d'éclairage (4) lors de l'acquisition de l'image respective, et
le déplacement (T1, T2 ; 75-78 ; 110), pour un canal de couleur, dépend d'une distance (66, 67) entre une position de mise au point (54, 56) pour le canal de couleur et une autre position de mise au point (52) pour un autre canal de couleur.

**2.** Dispositif d'acquisition d'image selon la revendication 1,
dans lequel le moyen d'évaluation électronique (20 ; 124-126) est conçu pour corriger des erreurs longitudinales de couleur au moyen dudit traitement.

**3.** Dispositif d'acquisition d'image selon la revendication 1 ou 2,
dans lequel la distance (66, 67) et/ou la position de mise au point (54, 56) sont stockées de manière non volatile sur un support de stockage (21) du dispositif d'acquisition d'image.

**4.** Dispositif d'acquisition d'image selon l'une des revendications précédentes,
dans lequel le moyen d'évaluation électronique (20 ; 124-126) est conçu pour corriger un astigmatisme.

**5.** Dispositif d'acquisition d'image selon la revendication 4, dans lequel le déplacement (110) appliqué à une image (41-43) acquise sous un certain angle d'éclairage (4) dépend de la position d'un faisceau (90) incident sous ledit angle d'éclairage (4) par rapport à un plan défini par un axe de l'astigmatisme et un axe optique (5) de l'optique d'imagerie.

**6.** Dispositif d'acquisition d'image selon la revendication 5, dans lequel le déplacement (110) appliqué à une image acquise sous un certain un angle d'éclairage (4) dépend de la position du faisceau (90) incident sous ledit angle d'éclairage par rapport à un premier plan défini par un premier axe d'astigmatisme et l'axe optique (5) et par rapport à un second plan défini par un second axe d'astigmatisme et l'axe optique (5).

**7.** Dispositif d'acquisition d'image selon la revendication 6, dans lequel une composante du déplacement le long d'un premier axe de coordonnées dépend d'une projection (93) du faisceau (90) incident dans le premier plan sous ledit angle d'éclairage, et dans lequel une composante du déplacement le long d'un second axe de coordonnées orthogonal au premier axe de coordonnées dépend d'une projection (98) du faisceau (90) incident dans le second plan sous ledit angle d'éclairage.

**8.** Dispositif d'acquisition d'image selon l'une des revendications précédentes, dans lequel le dispositif d'évaluation électronique (20 ; 124-126) est conçu pour corriger une courbure du champ d'image.

**9.** Dispositif d'acquisition d'image selon l'une des revendications précédentes, dans lequel le déplacement (110) dépend des points du champ.

**10.** Dispositif d'acquisition d'image selon l'une des revendications précédentes, dans lequel, pour la pluralité d'angles d'éclairage (4), le déplacement est respectivement stocké de manière non volatile sur un support de stockage (21) du dispositif d'acquisition d'image.

**11.** Dispositif d'acquisition d'image selon l'une des revendications précédentes, dans lequel le moyen d'évaluation électronique (20 ; 124-126) et conçu pour additionner ladite pluralité d'images après ladite correction d'image (44-46) afin de calculer une image résultante (47).

**12.** Dispositif d'acquisition d'image selon l'une des revendications précédentes, dans lequel le dispositif d'évaluation électronique (20 ; 124-126) est conçu pour appliquer la correction d'image à une image (41) détectée pour un angle d'éclairage (4), tandis que le détecteur détecte une autre image (42, 43) pour un autre angle d'éclairage.

**13.** Procédé d'acquisition d'image comprenant :

la détection d'une pluralité d'images (41-43) à l'aide d'un capteur d'image (15 ; 123) lorsqu'un objet (2) est éclairé sous une pluralité d'angles d'éclairage (4) ;
le traitement de la pluralité d'images (41-43), dans lequel le traitement comprend :

l'application d'une correction d'image à au moins une partie de la pluralité d'images (41-43), dans lequel la correction d'image comprend un déplacement (T1, T2 ; 75-78 ; 110), et
la combinaison de la pluralité d'images après application de la correction d'image (44-46),
dans lequel le déplacement (T1, T2 ; 75-78 ; 110) dépend de l'angle d'éclairage lors de l'acquisition de l'image respective (41-43),
dans lequel le capteur d'image (15 ; 123) comporte une pluralité de canaux de couleurs,
le déplacement (T1, T2 ; 75-78 ; 110) dépend du canal de couleur respectif et de l'angle d'éclairage (4) lors de l'acquisition de l'image respective, et
le déplacement (T1, T2 ; 75-78 ; 110), pour un canal de couleur, dépend de la distance (66, 67) entre une position de mise au point (54, 56) pour le canal de couleur et une autre position de mise au point (52) pour un autre canal de couleur.

1
21
Korrekturinformation
20
elektronische
Auswerteeinrichtung
15
Bildsensor
14
Detektor
z
x
5
13
4
3
2
12
11
Lichtquelle

FIG. 1

30
Beleuchten des Objekts unter einem ersten Beleuchtungswinkel und Erfassen eines ersten Bildes
31
Beleuchten des Objekts unter einem zweiten Beleuchtungswinkel und Erfassen eines zweiten Bildes
32
Beleuchten des Objekts unter einem N-ten Beleuchtungswinkel und Erfassen eines N-ten Bildes
33
Anwenden einer Bildkorrektur auf wenigstens einen Teil der erfassten Bilder
34
Kombinieren der Bilder
35

FIG. 2

41
42
43
$T_1$
$T_3$
44
45
46
47

FIG. 3

z
x
5
55
56
51
53
52
54

FIG. 4

63
61
62
66
60
67
64
65

FIG. 5

z
x
Δx
Δz
71
θx

z
y
Δy
Δz
72
θy

FIG. 6

FIG. 7

75

76

FIG. 8

77

78

FIG. 9

80
81
Ermitteln der Verschiebung für wenigstens m-1 Farbkanäle
82
Anwenden der Verschiebung auf wenigstens m-1 Farbkanäle abhängig von Beleuchtungswinkel
83
Kombinieren der m Farbkanäle
84
Weitere Verarbeitung der N Bilder

FIG. 10

106
107
91
5
97
92
99
94
96
98
90
93

FIG. 11

100
Ermitteln der Verschiebung abhängig von Beleuchtungswinkel relativ zu Ebenen des Astigmatismus
101
Anwenden der Abbildungskorrektur auf die N Bilder
102
Weitere Verarbeitung der N Bilder
103

FIG. 12

110

FIG. 13

120
Kalibrierung
Korrektur-
information
128
125
Bildsensor
Bildkorrektur
123
124
Beleuchtungs-
einrichtung
Ergebnisbild-
berechnung
121
126
Beleuchtungs-
steuerung
122

FIG. 14

130
132
133
136
138
134
135
131
137

FIG. 15

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20120098950 A1
- EP 1746846 A1